# EUROPEAN PATENT APPLICATION

(11) **EP 4 614 276 A1**
(43) Date of publication of application: **10.09.2025**
(21) Application number: 24765005.4
(22) Date of filing: 23.08.2024
(51) Int. Cl.: G06F 1/16, H04R 1/28, H04R 7/16, H04R 9/02

(54) **ELECTRONIC DEVICE COMPRISING SPEAKER MODULE**

(30) Priority: 20.11.2023 KR 20230161592; 14.12.2023 KR 20230181889
(71) Applicant: Samsung Electronics Co., Ltd, Suwon-si, Gyeonggi-do 16677 (KR)
(72) Inventor: KANG, Hyunggwang, Suwon-si, Gyeonggi-do 16677 (KR); KIM, Youngho, Suwon-si, Gyeonggi-do 16677 (KR); SEO, Soohyun, Suwon-si, Gyeonggi-do 16677 (KR); YOO, Changhee, Suwon-si, Gyeonggi-do 16677 (KR); JEONG, Hoyoung, Suwon-si, Gyeonggi-do 16677 (KR); CHO, Hyoungtak, Suwon-si, Gyeonggi-do 16677 (KR); LEE, Soyoung, Suwon-si, Gyeonggi-do 16677 (KR); LEE, Wonho, Suwon-si, Gyeonggi-do 16677 (KR)
(74) Representative: Appleyard Lees IP LLP
(86) International application number: PCT/KR2024/012649
(87) International publication number: WO 2025/110423

(57) **Abstract**

An electronic device according to an embodiment includes a housing including a first housing part and a second housing part, a guide member including a first guide part and a second guide part and movably coupled to the first guide part, and a speaker module disposed at least partially in a recess formed in the first guide part and an opening formed in a side of the first housing part. At least a portion of a diaphragm of the speaker module is located to overlap the opening.

## Description

### [Technical Field]

The present disclosure relates to electronic devices including a speaker module.

### [Background Art]

An electronic device may include a speaker for providing an audio signal. The speaker may include a diaphragm that generates the audio signal by vibration. The audio signal generated from the diaphragm may be radiated in a direction in which the diaphragm faces. For example, that the audio signal is radiated may include that sound waves generated by vibration of the diaphragm is transmitted, emitted, and/or outputted.

The electronic device may include a housing having a rollable or slidable structure. For example, the housing may include a first housing and a second housing that are movably coupled. The second housing may be slidable with respect to the first housing. The electronic device may include a guide member for guiding sliding of the second housing.

The above-described information may be provided as a related art for the purpose of helping understand the present disclosure. No assertion is made as to whether any of the above-described content comprises as a prior art for the present disclosure.

### [Disclosure]

### [Technical Solution]

An electronic device is provided. The electronic device may comprise a housing including a first housing part and a second housing part. The electronic device may comprise a guide member including a first guide part coupled to the first housing part, and a second guide part coupled to the second housing part and movably coupled to the first guide part. The electronic device may comprise a speaker module including a speaker including a diaphragm, and an enclosure surrounding at least portion of the speaker. The speaker module may be disposed at least partially in a recess formed in the first guide part and an opening formed in a side of the first housing part. At least a portion of the diaphragm may be located to overlap the opening.

An electronic device is provided. The electronic device may comprise a housing including a first housing part including a first side and a second side opposite to the first side, and a second housing part movably coupled to the first side and the second side. The electronic device may comprise a first guide member that guides a movement of the second housing part with respect to the first side and is coupled to the inside of the first side. The electronic device may comprise a second guide member that guides a movement of the second housing part with respect to the second side and is coupled to the inside of the second side. The electronic device may comprise a first speaker module disposed in a first opening formed in the first side and the first recess formed in the first guide member. The electronic device may comprise a second speaker module disposed in a second opening formed in the second side and the second recess formed in the second guide member. The first speaker module may be arranged to face a direction in which the first side faces. The second speaker module may be arranged to face a direction in which the second side faces. According to the present disclosure there are provided apparatus and methods as set forth in the appended claims. Other features of the disclosure will be apparent from the dependent claims, and the description which follows.

### [Description of the Drawings]

FIG. 1 is a block diagram of an electronic device in a network environment according to an embodiment.
FIG. 2A is a top plan view of an exemplary electronic device in a first state.
FIG. 2B is a bottom view of the exemplary electronic device of FIG 2A in a first state.
FIG. 2C is a top plan view of the exemplary electronic device of FIG 2A in a second state.
FIG. 2D is a bottom view of the exemplary electronic device of FIG 2A in a second state.
FIGS. 3A and 3B are exploded perspective views of an exemplary electronic device.
FIG. 4A is a cross-sectional view of the exemplary electronic device in a first state.
FIG. 4B is a cross-sectional view of the exemplary electronic device in a second state.
FIG. 5A illustrates an exemplary speaker module.
FIG. 5B illustrates a diaphragm of the exemplary speaker module.
FIG. 5C is a cross-sectional view of the diaphragm of FIG. 5B cut along C-C'.
FIG. 6 illustrates the exemplary electronic device.
FIG. 7A illustrates the interior of the exemplary electronic device.
FIG. 7B illustrates an exemplary guide member.
FIG. 7C is a cross-sectional view of the electronic device of FIG. 7A cut along D-D'.
FIG. 8A illustrates the exemplary electronic device.
FIG. 8B is a cross-sectional view of the electronic device of FIG. 8A cut along E-E'.
FIG. 8C is a cross-sectional view of the electronic device of FIG. 8A cut along F-F'.
FIG. 9A illustrates a rear of the exemplary electronic device.
FIG. 9B illustrates a flexible printed circuit board and an enclosure.
FIG. 10 illustrates an assembly process of a speaker.
FIG. 11 schematically illustrates a state in which a speaker of an exemplary electronic device operates.
FIG. 12 illustrates a guide member including a structure for expanding a resonance space.

### [Mode for Invention]

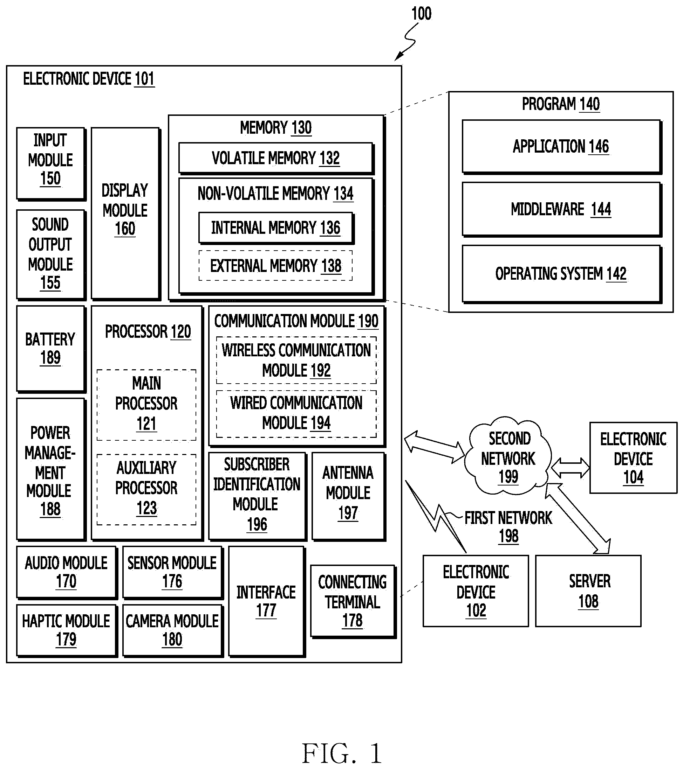

FIG. 1 is a block diagram illustrating an electronic device in a network environment according to various embodiments.

Referring to FIG. 1, the electronic device 101 in the network environment 100 may communicate with an electronic device 102 via a first network 198 e.g., a short-range wireless communication network, or at least one of an electronic device 104 or a server 108 via a second network 199, e.g., a long-range wireless communication network. The electronic device 101 may communicate with the electronic device 104 via the server 108. The electronic device 101 includes a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, and an antenna module 197. In other embodiments, at least one of the components, e.g., the connecting terminal 178, may be omitted from the electronic device 101, or one or more other components may be added in the electronic device 101. Some of the components, e.g., the sensor module 176, the camera module 180, or the antenna module 197, may be implemented as a single component, e.g., the display module 160.

The processor 120 may execute, for example, software, e.g., a program 140, to control at least one other component, e.g., a hardware or software component, of the electronic device 101 coupled with the processor 120, and may perform various data processing or computation. As at least part of the data processing or computation, the processor 120 may store a command or data received from another component, e.g., the sensor module 176 or the communication module 190, in volatile memory 132, process the command or the data stored in the volatile memory 132, and store resulting data in non-volatile memory 134The processor 120 may include a main processor 121, e.g., a central processing unit "CPU" or an application processor "AP", or an auxiliary processor 123, e.g., a graphics processing unit "GPU", a neural processing unit "NPU", an image signal processor "ISP", a sensor hub processor, or a communication processor "CP", that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component, e.g., the display module 160, the sensor module 176, or the communication module 190, among the components of the electronic device 101, instead of the main processor 121 while the main processor 121 is in an inactive, e.g., sleep, state, or together with the main processor 121 while the main processor 121 is in an active state, e.g., executing an application. The auxiliary processor 123, e.g., an image signal processor or a communication processor, may be implemented as part of another component, e.g., the camera module 180 or the communication module 190, functionally related to the auxiliary processor 123. The auxiliary processor 123, e.g., the neural processing unit, may include a hardware structure specified for artificial intelligence model processing. An artificial intelligence model may be generated by machine learning. Such learning may be performed, e.g., by the electronic device 101 where the artificial intelligence is performed or via a separate server, e.g., the server 108. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network "DNN", a convolutional neural network "CNN", a recurrent neural network "RNN", a restricted boltzmann machine "RBM", a deep belief network "DBN", a bidirectional recurrent deep neural network "BRDNN", deep Q-network or a combination of two or more thereof but is not limited thereto. The artificial intelligence model may, additionally or alternatively, include a software structure other than the hardware structure.

The memory 130 may store various data used by at least one component, e.g., the processor 120 or the sensor module 176, of the electronic device 101. The various data may include, for example, software, e.g., the program 140, and input data or output data for a command related thereto. The memory 130 may include the volatile memory 132 or the non-volatile memory 134.

The program 140 may be stored in the memory 130 as software, and may include, for example, an operating system "OS" 142, middleware 144, or an application 146.

The input module 150 may receive a command or data to be used by another component, e.g., the processor 120, of the electronic device 101, from the outside, e.g., a user, of the electronic device 101. The input module 150 may include, for example, a microphone, a mouse, a keyboard, a key e.g., a button,, or a digital pen e.g., a stylus pen.

The sound output module 155 may output sound signals to the outside of the electronic device 101. The sound output module 155 may include, for example, a speaker or a receiver. The speaker may be used for general purposes, such as playing multimedia or playing audio recordings. The receiver may be used for receiving incoming calls. The receiver may be implemented as separate from, or as part of the speaker.

The display module 160 may visually provide information to the outside, e.g., to a user of the electronic device 101. The display module 160 may include, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device, e.g., an electronic device 102 directly coupled with the electronic device 101. This coupling may be over a wired, or wireless connection.

The sensor module 176 may detect an operational state, e.g., power or temperature, of the electronic device 101 or an environmental state, e.g., a state of a user, external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared "IR" sensor, a biometric sensor, a temperature sensor, a humidity sensor, or an illuminance sensor.

The interface 177 may support one or more specified protocols to be used for the electronic device 101 to be coupled with the external electronic device, e.g., the electronic device 102, directly. This coupling may be over a wired or wireless connection. The interface 177 may include, for example, a high definition multimedia interface "HDMI", a universal serial bus "USB" interface, a secure digital "SD" card interface, or an audio interface.

A connecting terminal 178 may include a connector via which the electronic device 101 may be physically connected with the external electronic device, e.g., the electronic device 102. According to an embodiment, the connecting terminal 178 may include, for example, a HDMI connector, a USB connector, a SD card connector, or an audio connector e.g., a headphone connector.

The haptic module 179 may convert an electrical signal into a mechanical stimulus, e.g., a vibration or a movement, or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit "PMIC".

The battery 189 may supply power to at least one component of the electronic device 101. The battery 189 may include, for example, a primary cell which is not rechargeable, a secondary cell which is rechargeable, or a fuel cell.

The communication module 190 may support establishing a direct, e.g., wired, communication channel or a wireless communication channel between the electronic device 101 and the external electronic device, e.g., the electronic device 102, the electronic device 104, or the server 108, and performing communication via the established communication channel. The communication module 190 may include one or more communication processors that are operable independently from the processor 120, e.g., the application processor "AP", and supports a direct, e.g., wired, communication or a wireless communication. The communication module 190 may include a wireless communication module 192, e.g., a cellular communication module, a short-range wireless communication module, or a global navigation satellite system "GNSS" communication module or a wired communication module 194, e.g., a local area network "LAN" communication module or a power line communication "PLC" module. A corresponding one of these communication modules may communicate with the external electronic device via the first network 198, e.g., a short-range communication network, such as Bluetooth^{™}, wireless-fidelity "Wi-Fi" direct, or infrared data association "IrDA", or the second network 199, e.g., a long-range communication network, such as a legacy cellular network, a 5G network, a next-generation communication network, the Internet, or a computer network, e.g. LAN or wide area network "WAN". These various types of communication modules may be implemented as a single component, e.g., a single chip, or may be implemented as multi components, e.g., multi chips, separate from each other. The wireless communication module 192 may identify and authenticate the electronic device 101 in a communication network, such as the first network 198 or the second network 199, using subscriber information, e.g., international mobile subscriber identity "IMSI", stored in the subscriber identification module 196.

The wireless communication module 192 may support a 5G network, after a 4G network, and next-generation communication technology, e.g., new radio "NR" access technology. The NR access technology may support enhanced mobile broadband "eMBB", massive machine type communications "mMTC", or ultra-reliable and low-latency communications "URLLC". The wireless communication module 192 may support a high-frequency band, e.g., the mmWave band, to achieve, e.g., a high data transmission rate. The wireless communication module 192 may support various technologies for securing performance on a high-frequency band, such as, e.g., beamforming, massive multiple-input and multiple-output "massive MIMO", full dimensional MIMO "FD-MIMO", array antenna, analog beam-forming, or large scale antenna. The wireless communication module 192 may support various requirements specified in the electronic device 101, an external electronic device, e.g., the electronic device 104, or a network system, e.g., the second network 199. According to an embodiment, the wireless communication module 192 may support a peak data rate, e.g., 20Gbps or more, for implementing eMBB, loss coverage, e.g., 164dB or less, for implementing mMTC, or U-plane latency, e.g., 0.5ms or less for each of downlink "DL" and uplink "UL", or a round trip of 1ms or less for implementing URLLC.

The antenna module 197 may transmit or receive a signal or power to or from the outside e.g., the external electronic device, of the electronic device 101. The antenna module 197 may include an antenna including a radiating element composed of a conductive material or a conductive pattern formed in or on a substrate, e.g., a printed circuit board "PCB". The antenna module 197 may include a plurality of antennas, e.g., array antennas. In such a case, at least one antenna appropriate for a communication scheme used in the communication network, such as the first network 198 or the second network 199, may be selected, for example, by the communication module 190, e.g., the wireless communication module 192, from the plurality of antennas. The signal or the power may then be transmitted or received between the communication module 190 and the external electronic device via the selected at least one antenna. Another component, e.g. a radio frequency integrated circuit "RFIC", other than the radiating element may be additionally formed as part of the antenna module 197.

The antenna module 197 may form a mmWave antenna module. The mmWave antenna module may include a printed circuit board, a RFIC disposed on a first surface, e.g., the bottom surface, of the printed circuit board, or adjacent to the first surface and capable of supporting a designated high-frequency band, e.g., the mmWave band,, and a plurality of antennas, e.g., array antennas, disposed on a second surface, e.g. the top or a side surface,) of the printed circuit board, or adjacent to the second surface and capable of transmitting or receiving signals of the designated high-frequency band.

At least some of the above-described components may be coupled mutually and communicate signals, e.g. commands or data, therebetween via an inter-peripheral communication scheme, e.g., a bus, general purpose input and output "GPIO", serial peripheral interface "SPI", or mobile industry processor interface "MIPI".

Commands or data may be transmitted or received between the electronic device 101 and the external electronic device 104 via the server 108 coupled with the second network 199. Each of the electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing "MEC", or client-server computing technology may be used, for example. The electronic device 101 may provide ultra low-latency services using, e.g. distributed computing or mobile edge computing. In another embodiment, the external electronic device 104 may include an internet-of-things "IoT" device. The server 108 may be an intelligent server using machine learning and/or a neural network. The external electronic device 104 or the server 108 may be included in the second network 199. The electronic device 101 may be applied to intelligent services, e.g., smart home, smart city, smart car, or healthcare, based on 5G communication technology or IoT-related technology.

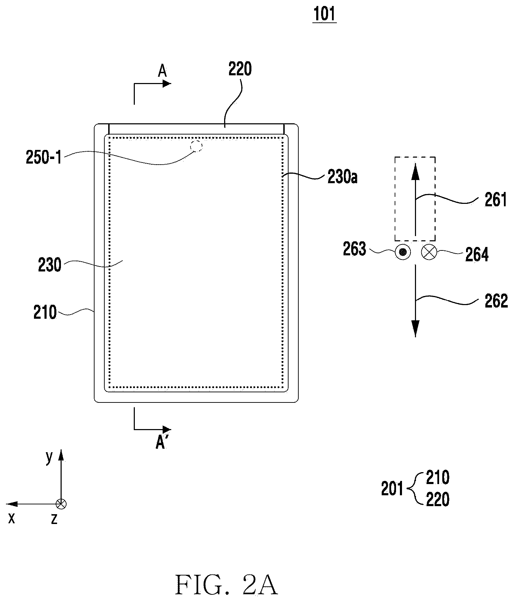

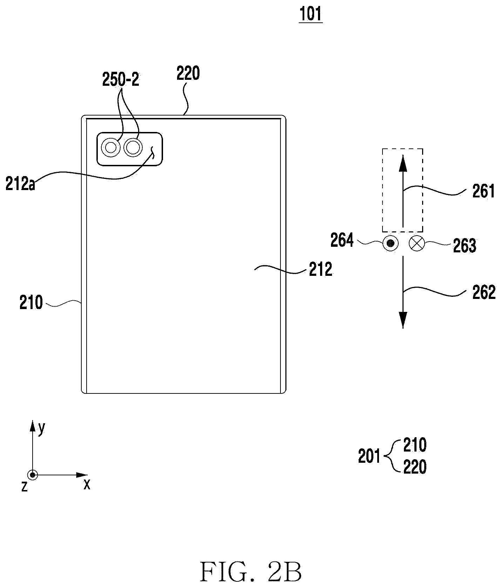

A display of the display module 160 may be flexible. For example, the display may include a display area exposed outside the housing of the electronic device 101 that provides at least a portion of the outer surface of the electronic device 101. In such examples, since the display has flexibility, at least a portion of the display may be rollable into the housing or slidable into the housing. For example, a size of the display area may be changed according to a size of the at least a portion of the display that is rolled into the housing or slid into the housing. The electronic device 101 including the display may thus be arranged in a plurality of states, including a first state providing the display area having a first size and a second state providing the display area having a second size different from the first size. Examples of the first state may are exemplified through the description of FIGS. 2A and 2B.

FIG. 2A is a top plan view of an exemplary electronic device in a first state.

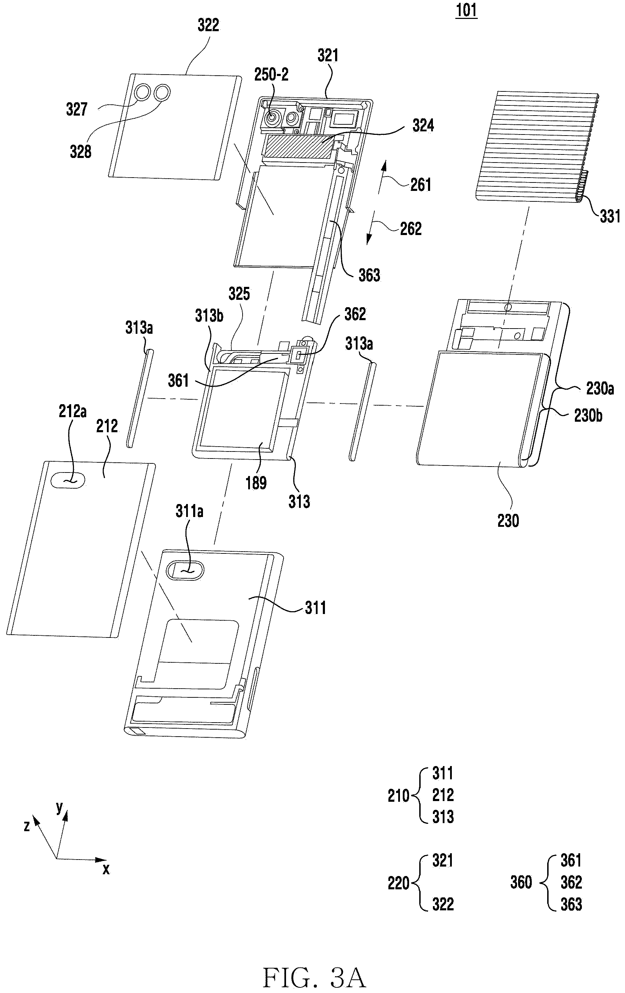

Referring to FIG. 2A, an electronic device 101 includes a housing 201 and a flexible display 230. The housing 201 includes a first housing part 210 and a second housing part 220. The first housing part 210 is movable with respect to the second housing part 220 in a first direction 261 parallel to a y-axis and a second direction 262 parallel to the y-axis and opposite to the first direction 261. In the present disclosure, it is described that the first housing part 210 is moved with respect to the second housing part 220, but is not limited thereto. The housing 201 has a structure in which the overall size of the housing 201 may be changed, according to a change of a relative positional relationship between the first housing part 210 and the second housing part 220. The relative positional relationship between the first housing part 210 and the second housing part 220 may be changed by the operation of a motor, e.g., motor 361 of FIG. 3A, to be described later. For example, by a motor such as the motor 361, the second housing part 220 is movable with respect to the first housing part 210. Considering the relative movement of the first and second housing parts 210, 220, both the first housing part 210 and the second housing part 220 may be movable relative to one another, or to a datum point, such as by operation of a motor as described.

The electronic device 101 is in the first state in FIG. 2A. In the first state, the second housing part 220 is movable with respect to the first housing part 210 in the first direction 261, as from among the first direction 261 and the second direction 262. That is, in the first state, the second housing part 220 is not substantially movable in the second direction 262 with respect to the first housing part 210.

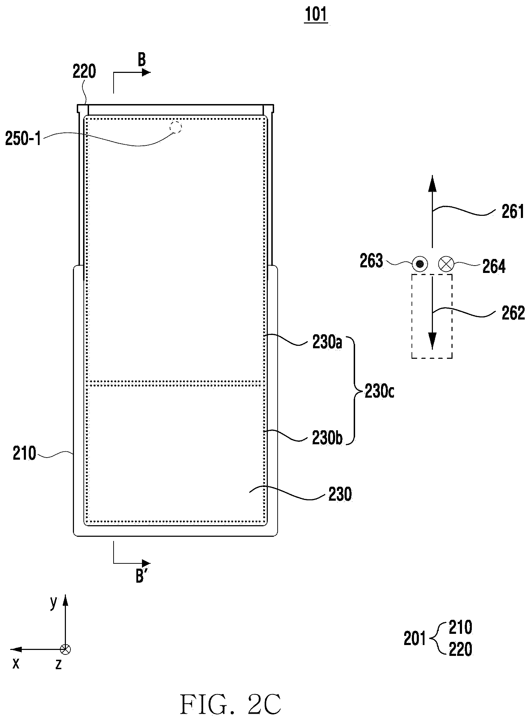

In the first state, the flexible display 230 provides a display area having a minimum size, also referred to as the smallest size. In the first state, the display area corresponds to a first display area 230a. Although not illustrated in FIG. 2A, in the first state, a second display area, corresponding e.g., a second display area 230b of FIG. 2C of the flexible display 230 and being different from the first display area 230a, is included in the first housing part 210. With the electronic device 101 in the first state, the second display area 230b of FIG. 2C is covered by the first housing part 210. In the embodiments show, with the electronic device 101 in the first state, the area of the display corresponding to the second display area 230b is rolled into the first housing part 210.

The first state may be referred to as a slide-in state or a closed state, on the basis that at least a portion of the second housing part 220 is located in the first housing part 210. The first state may also be referred to as a reduced state, as the first state provides the display area having the smallest size.

The second housing part 220 includes a first image sensor 250-1 in a camera module 180 that is exposed through a portion of the first display area 230a and faces a third direction 263 parallel to a z-axis. Although not illustrated in FIG. 2A, the second housing part 220 may include one or more second image sensors in the camera module 180 that are exposed through a portion of the second housing part 220 and face a fourth direction 264 parallel to the z-axis and opposite to the third direction 263. The one or more second image sensors are illustrated and described with reference to FIG. 2B.

FIG. 2B is a bottom view of an the electronic device 101 of FIG. 2A in a first state.

Referring to FIG. 2B, in the first state, one or more second image sensors 250-2 disposed in a second housing part 220 may be located within a structure disposed in a first housing part 210 for the one or more second image sensors 250-2. Light from the outside of an electronic device 101 may be received by the one or more second image sensors 250-2 through the structure, in the first state. The one or more second image sensors 250-2 are located within the structure, and are exposed through the structure in the first state. The structure in which the one or more second image sensors 250-2 are disposed may be implemented in various ways. For example, the structure may be an opening or a notch. For example, the structure may be an opening 212a in a first plate 212 of the first housing part 210 surrounding at least a portion of the second housing part 220. In the first state, the one or more second image sensors 250-2 included in the second housing part 220 may be covered by the first plate 212 of the first housing part 210 in other embodiments.

The electronic device 101 may change configuration from the first state to a second state. The first state may be changed to the second state through intermediate states between the first state and the second state. The same applies to intermediate states between the second state and the first state as the configuration of the electronic device 101 changes therebetween.

For example, the first state may be changed to the second state, or vice versa based on user input. For example, a state change may be initiated in response to a user input received at a physical button exposed through a portion of the first housing part 210 or a portion of the second housing part 220. A state change may be initiated in response to a touch input for an executable object displayed in the display area. A state change may be initiated in response to a touch input having a contact point on the display area and having a pressing intensity greater than or equal to a reference intensity. A state change may be initiated in response to a voice input received through a microphone of the electronic device 101. A state change may be initiated in response to an external force applied to the first housing part 210 and/or the second housing part 220 for moving the second housing part 220 with respect to the first housing part 210. A state change may be initiated in response to a user input identified in an external electronic device, e.g., earbuds or smart watch, connected to the electronic device 101.

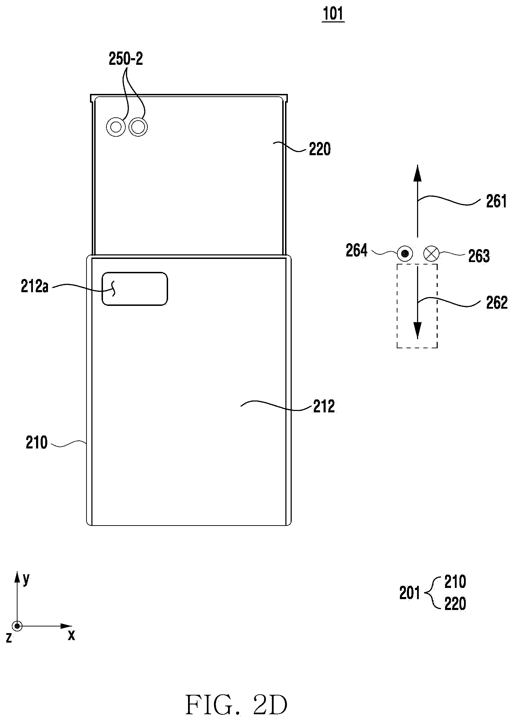

The second state is exemplified through the description of FIGS. 2C and 2D.

FIG. 2C is a top plan view of the electronic device of FIG. 2A in a second state.

Referring to FIG. 2C, an electronic device 101 is in the second state, in which the second housing part 220 is movable with respect to a first housing part 210 in a second direction 262 as from among a first direction 261 and the second direction 262. In the second state, the second housing part 220 is not be substantially movable in the first direction 261 with respect to the first housing part 210.

In the second state, a flexible display 230 provides a display area having a maximum size, also referred to as the largest size. For example, in the second state, the display area corresponds to an area 230c including a first display area 230a and a second display area 230b. The second display area 230b that was included in the first housing part 210 in the first state is exposed in the second state.

For example, the second state may be referred to as a slide-out state or an open state, on the basis that at least a portion of the second housing part 220 disposed outside the first housing part 210 is extended, as compared to the first state. The second state may also be referred to as an expanded state in terms as the second state provides the display area having the largest size.

When a state of the electronic device 101 is changed from the first state to the second state, a first image sensor 250-1 facing a third direction 263 may move together with the first display area 230a according to a movement of the second housing part 220 in the first direction 261. Although not illustrated in FIG. 2C, when the state of the electronic device 101 is changed from the first state to the second state, one or more second image sensors 250-2 facing a fourth direction 264 may be moved according to the movement of the second housing part 220 in the first direction 261. A relative positional relationship between the one or more second image sensors 250-2 and the structure illustrated through the description of FIG. 2D is thus changed according to the movement of the one or more second image sensors 250-2. The change of the relative positional relationship is illustrated and described with reference to FIG. 2D.

FIG. 2D is a bottom view of the electronic device of FIG. 2A in a second state.

Referring to FIG. 2D, in the second state, one or more second image sensors 250-2 may be located outside the structure. The structure includes an opening 212a. In the second state, the one or more second image sensors 250-2 are located outside the opening 212a in the first plate 212. The one or more second image sensors 250-2 are exposed through the opening 212a, in the first state. Since the one or more second image sensors 250-2 are located outside the first housing part 210 in the second state, the one or more second image sensors 250-2 are exposed in the second state. Since the one or more second image sensors 250-2 are located outside the structure in the second state, the relative positional relationship of the image sensors in the second state is different to their relative positional relationship when the electronic device 101 is arranged in the in the first state.

For example, in case that an electronic device 101 does not include the structure such as the opening 212a, the one or more second image sensors 250-2 may be exposed in the second among the first state and the second state.

Although not illustrated in FIGS. 2A, 2B, 2C, and 2D, the electronic device 101 may be arranged to assume an intermediate state between the first state and the second state. For example, a size of the display area in the intermediate state may be larger than a size of the display area in the first state and smaller than a size of the display area in the second state. The display area in the intermediate state may correspond to an area including a first display area 230a and a portion of a second display area 230b. In the intermediate state, a portion of the second display area 230b may be exposed, and another portion, such as a remaining portion, of the second display area 230b may be covered by the first housing part 210 or rolled into the first housing part 210.

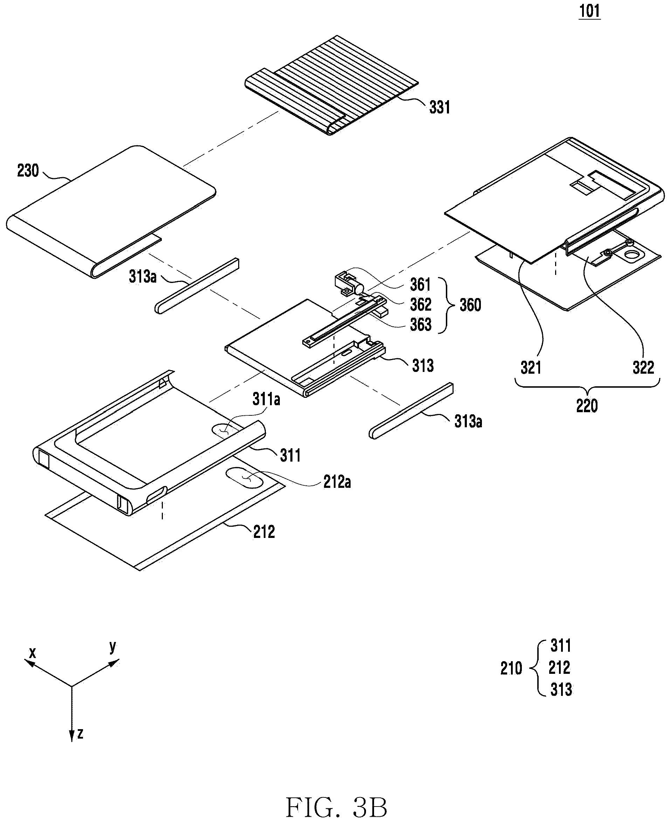

The electronic device 101 includes structures for moving a second housing part 210 with the first housing part 220, e.g., moving the second housing part 220 with respect to the first housing part 210 of the electronic device 101. Such structures are exemplified through the description of FIGS. 3A and 3B.

FIGS. 3A and 3B are exploded perspective views of an exemplary electronic device.

Referring to FIGS. 3A and 3B, an electronic device 101 includes a first housing part 210, a second housing part 220, a flexible display 230, and a driving unit 360.

The first housing part 210 includes a first cover 311, a first plate 212, and a frame 313.

The first cover 311 may at least partially form a side portion of an outer surface of the electronic device 101. The first cover 311 may include an opening 311a for one or more second image sensors 250-2. The first cover 311 may include a surface supporting the first plate 212. For example, the first cover 311 may be coupled to the first plate 212. For example, the first cover 311 may include the frame 313. The first cover 311 may be coupled to the frame 313.

The first plate 212 may at least partially form a rear portion of the outer surface. For example, the first plate 212 may include an opening 212a for the one or more second image sensors 250-2. For example, the first plate 212 may be disposed on the surface of the first cover 311. For example, the opening 212a may be aligned with the opening 311a.

The frame 313 may be at least partially surrounded by the first cover 311.

The frame 313 may be at least partially surrounded by the flexible display 230. For example, the frame 313 may be at least partially surrounded by the flexible display 230, but a position of the frame 313 may be maintained independently of a movement of the flexible display 230. For example, the frame 313 may include rails 313a that provide (or guide) a path for the movement of at least one component of the flexible display 230.

The frame 313 may be coupled with at least one component of the electronic device 101. For example, the frame 313 may support a battery 189. For example, the frame 313 may be coupled with one end of the flexible printed circuit board (FPCB) 325 on a surface of the frame 313. For example, although not explicitly illustrated in FIGS. 3A and 3B, another end of the FPCB 325 may be connected to a PCB 324 through at least one connector. For example, the PCB 324 may be electrically connected to another PCB (not illustrated in FIGS. 3A and 3B) that supplies power to a motor 361 through the FPCB 325.

The frame 313 may be coupled with at least one structure of the electronic device 101 for a plurality of states including the first state and the second state. For example, the frame 313 may fasten the motor 361 of the driving unit 360.

The second housing part 220 may include a second cover 321 and a second plate 322.

The second cover 321 may be at least partially surrounded by the flexible display 230. For example, the second cover 321 may be coupled with at least a portion of a first display area 230a of the flexible display 230 surrounding the second cover 321.

The second cover 321 may be coupled with at least one component of the electronic device 101. For example, the second cover 321 may be coupled with the printed circuit board, "PCB" 324 including components of the electronic device 101. For example, the PCB 324 may include a processor 120 as described above. The second cover 321 may support the one or more second image sensors 250-2 as described above.

The second cover 321 may be coupled to the second plate 322.

The second plate 322 may be coupled with the second cover 321, in order to protect at least one component of the electronic device 101 coupled in the second cover 321 and/or at least one structure of the electronic device 101 coupled in the second cover 321. The second plate 322 may include a structure for the at least one component. For example, the second plate 322 may include one or more openings 326 for the one or more second image sensors 250-2. The one or more openings 326 may be aligned with the one or more second image sensors 250-2 disposed on the second cover 321. The size of each of the one or more openings 326 may correspond to a size of each of lenses included in the one or more second image sensors 250-2.

The electronic device 101 may include a support member 331 for supporting at least a portion of the flexible display 230. For example, the support member 331 may include a plurality of bars. The plurality of bars may be coupled with each other. The support member 331 may support a second display area 230b of the flexible display 230.

The driving unit 360 may include the motor 361, a pinion gear 362, and a rack gear 363.

The motor 361 may operate based on power from the battery, such as a battery corresponding to the battery 189 of FIG. 1. For example, the power may be provided to the motor 361 in response to user input.

The pinion gear 362 may be coupled with the motor 361 through a shaft. The pinion gear 362 may be rotated based on the operation of the motor 361 transmitted through the shaft.

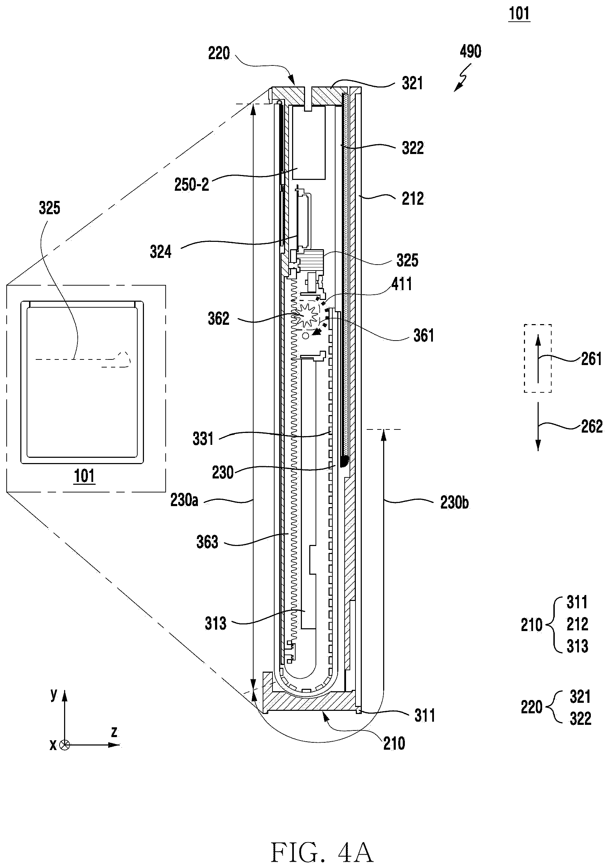

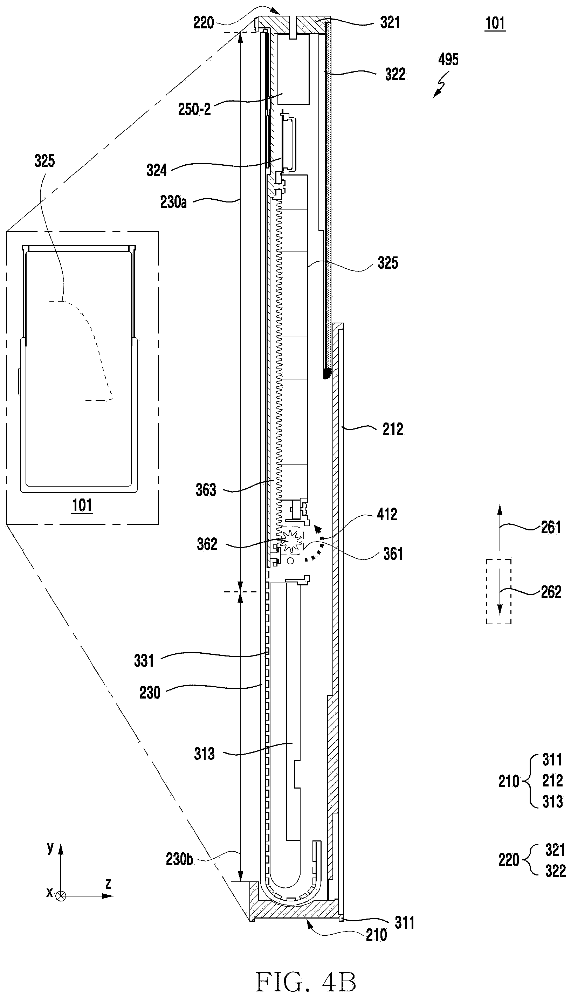

The rack gear 363 may be arranged in cooperative relation with the pinion gear 362, such that teeth of the rack gear 363 may engage with teeth of the pinion gear 362. For example, according to the rotation of the pinion gear 362, the rack gear 363 may be moved in a first direction 261 or a second direction 262. For example, the rack gear 363 may be coupled with the first housing part 210 or the second housing part 220. For example, the second housing part 220 may be moved in the first direction 261 and the second direction 262, by the rack gear 363 that is moved according to the rotation of the pinion gear 362 due to the operation of the motor 361. For example, the first state of the electronic device 101 may be changed to a state (e.g., the one or more intermediate states or the second state) different from the first state, through the movement of the second housing part 220 in the first direction 261. For example, the second state of the electronic device 101 may be changed to a state (e.g., the one or more intermediate states or the first state) different from the second state, through the movement of the second housing part 220 in the second direction 262. For example, a change of the first state to the second state by the driving unit 360 and a change of the second state to the first state by the driving unit 360 may be exemplified through FIGS. 4A and 4B.

FIG. 4A is a cross-sectional view of an exemplary electronic device in a first state. FIG. 4B is a cross-sectional view of an exemplary electronic device in a second state.

For example, FIG. 4A is a cross-sectional view of an exemplary electronic device 101 cut along the A-A' of FIG. 2A. For example, FIG. 4B is a cross-sectional view of an exemplary electronic device 101 cut along B-B' of FIG. 2C.

Referring to FIGS. 4A and 4B, a motor 361 may be operated based on the defined user input received in a state 490 that is the first state. The pinion gear 362 may be rotated in a first rotation direction 411 based on the operation of the motor 361. The rack gear 363 may be moved in a first direction 261 based on the rotation of the pinion gear 362 in the first rotation direction 411. For example, a second housing part 220 may be moved in the first direction 261 based on the movement of the rack gear 363 in the first direction 261. For example, a second cover 321 in the second housing part 220 may be moved based on the movement of the rack gear 363 in the first direction 261. For example, a flexible display 230 may be moved along rails 313a. For example, a shape of at least some of the plurality of bars of a support member 331 of the flexible display 230 may be changed when the state 490 is changed to a state 495 that is the second state.

For example, a second display area 230b of the flexible display 230 may be moved according to the movement of the flexible display 230. For example, when the state 490 is changed to the state 495 according to the defined user input, the second display area 230b may be moved through a space between a first cover 311 and a frame 313. For example, the second display area 230b in the state 495 may be exposed, unlike the second display area 230b rolled into the space in the state 490.

For example, since the second cover 321 in the second housing part 220 is coupled with a PCB 324 connected to the other end of a FPCB 325 and fastens the rack gear 363, a shape of the FPCB 325 may be changed when the state 490 is changed to the state 495.

The motor 361 may be operated based on the defined user input received in the state 495. For example, the pinion gear 362 may be rotated in a second rotation direction 412 based on the operation of the motor 361. For example, the rack gear 363 may be moved in a second direction 262 based on the rotation of the pinion gear 362 in the second rotation direction 412. For example, the second housing part 220 may be moved in the second direction 262 based on the movement of the rack gear 363 in the second direction 262. For example, the flexible display 230 may be moved based on the movement of the rack gear 363 in the second direction 262. For example, the flexible display 230 may be moved along the rails 313a. For example, the shape of at least some of the plurality of bars of the support member 331 of the flexible display 230 may is changed when the state 495 is changed to the state 490. The support member 331 may be moved with respect to the first housing part 210. The support member 331 stored inside the first housing part 210 in the state 490 may be located between the first cover 311 and the frame 313. According to the movement of the support member 331, the flexible display 230 may be moved with respect to the first housing part 210.

For example, the second display area 230b of the flexible display 230 may be moved according to the movement of the flexible display 230. For example, when the state 495 is changed to the state 490 according to the defined user input, the second display area 230b may be moved through the space between the first cover 311 and the frame 313. For example, the second display area 230b in the state 490 may be rolled into the space, unlike the second display area 230b exposed in the state 495.

For example, since the second cover 321 of the second housing part 220 is coupled with the PCB 324 connected to the other end of the FPCB 325 and fastens the rack gear 363, a shape of the FPCB 325 may be changed when the state 495 is changed to the state 490.

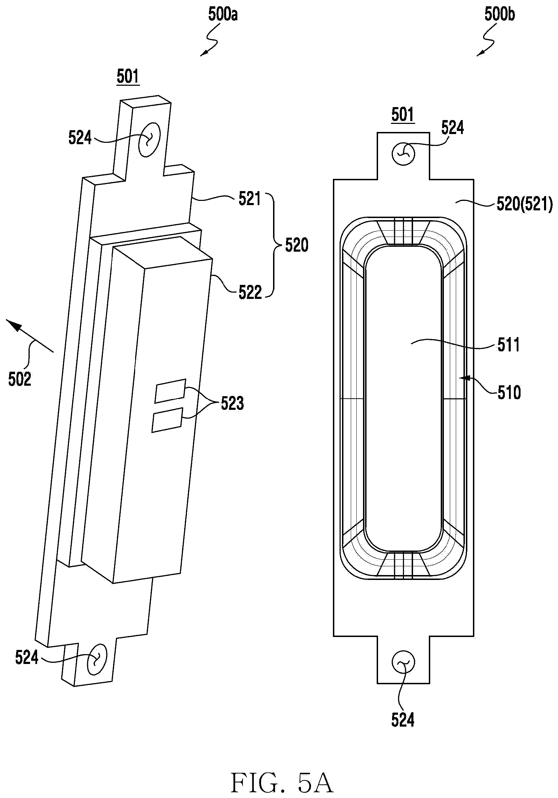

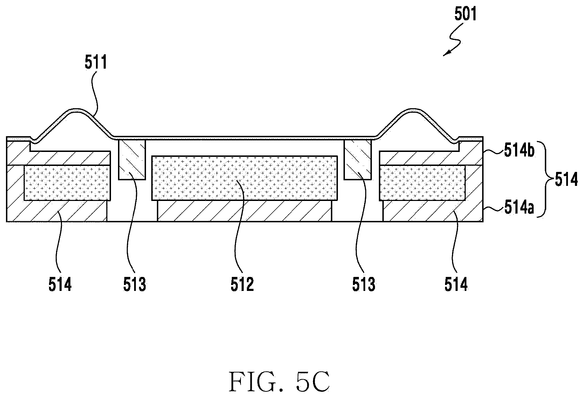

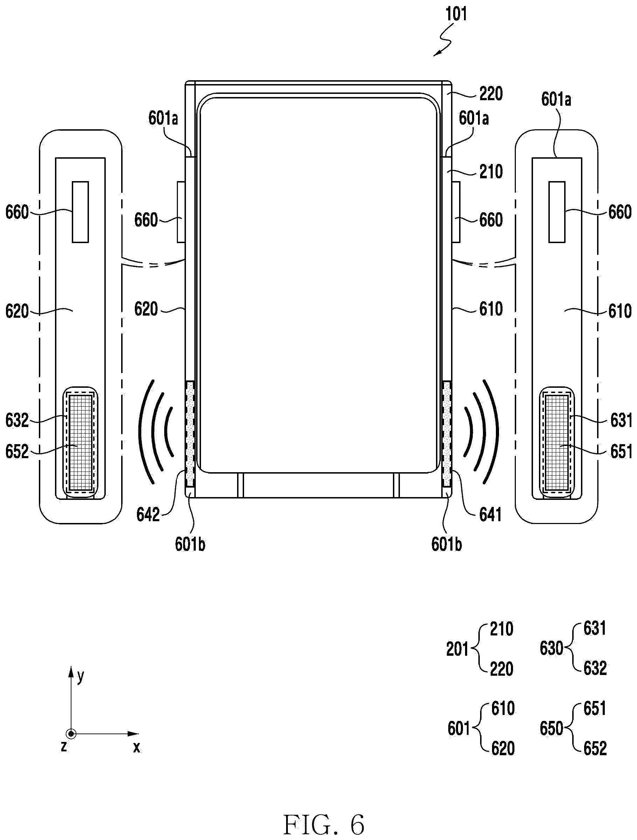

The electronic device 101 includes a speaker, e.g., a speaker 510 of FIG. 6, for providing an audio signal. The speaker 510 may include a diaphragm, e.g., a diaphragm 511 of FIG. 5C; a magnet, e.g., a magnet 512 of FIG. 5C; and a voice coil, e.g., a voice coil 513 of FIG. 5C. The speaker 510 may be surrounded by an enclosure, e.g., an enclosure 520 of FIG. 5A. The speaker 510 may be disposed in a housing 201 of the electronic device 101.

For example, the diaphragm 511 may be configured to radiate sound, also referred to as an audio signal, by vibrating. The audio signal may be radiated in a direction in which the diaphragm 511 faces. In case that a diaphragm of a speaker such as that of the speaker module 501 is disposed to face a position such as the lower end portion of the housing aligned with a direction into which the second display area of the flexible display moves, the audio signal may be blocked by the second display area and thus may not be effectively transmitted to a user. In case that a speaker module 501 is located close to the upper end portion of the housing 201, space for electronic components such as a printed circuit board, a battery, a driving unit, or second image sensors may be insufficient.

In case that a direction in which the audio signal is radiated from the diaphragm 511 and a direction in which the audio signal is radiated from the housing 201 to the outside of the electronic device 101 are different, a structure, e.g., an acoustic duct or an acoustic pipe, for transmitting the audio signal radiated from the diaphragm 511 may be formed inside the housing 201. Such structures may include an acoustic duct or acoustic pipe in a bent form according to the transmission path of the audio signal, and for the structure additional space is required in the housing. Furthermore, when the audio signal passes through the structure, the audio signal may be distorted.

The exemplary electronic device 101 includes the rollable or slidable housing 201, and the speaker 510 disposed close to the lower end of the housing 201. The electronic device 101 is arranged such that the audio signal radiated from the speaker 510 does not interfere with the flexible display 230. The electronic device 101 has a structure in which the diaphragm 511 may faces a side 601 of the housing 201 so as not to require a structure for transmitting the audio signal.

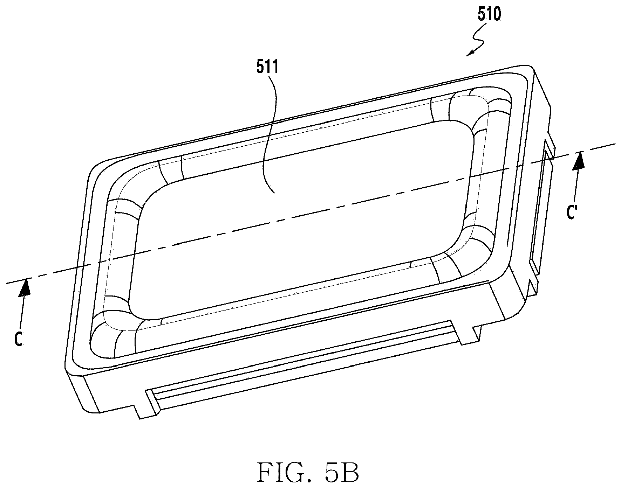

Hereinafter, an exemplary electronic device 101 is described with reference to FIG. 5 through 9. The electronic device 101 described below may include substantially the same components as the electronic device 101 illustrated in FIGS. 2A to 4B. The same components as the above-described components may be given the same reference numbers, and overlapping descriptions may be omitted.

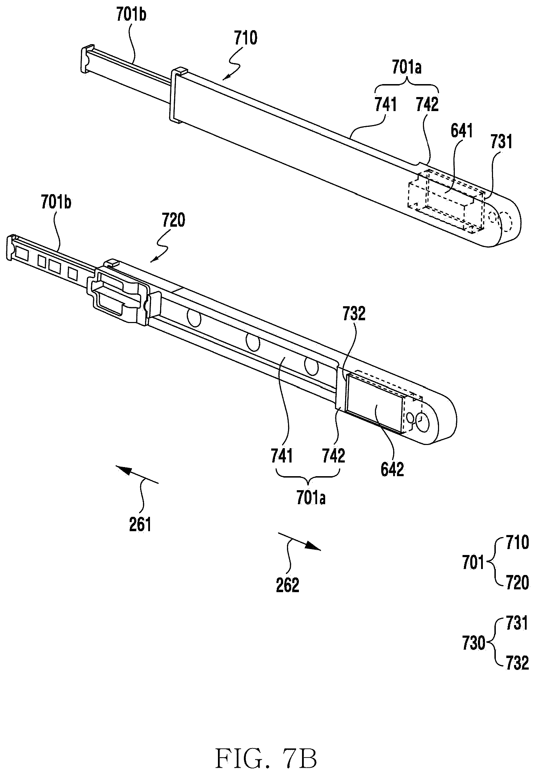

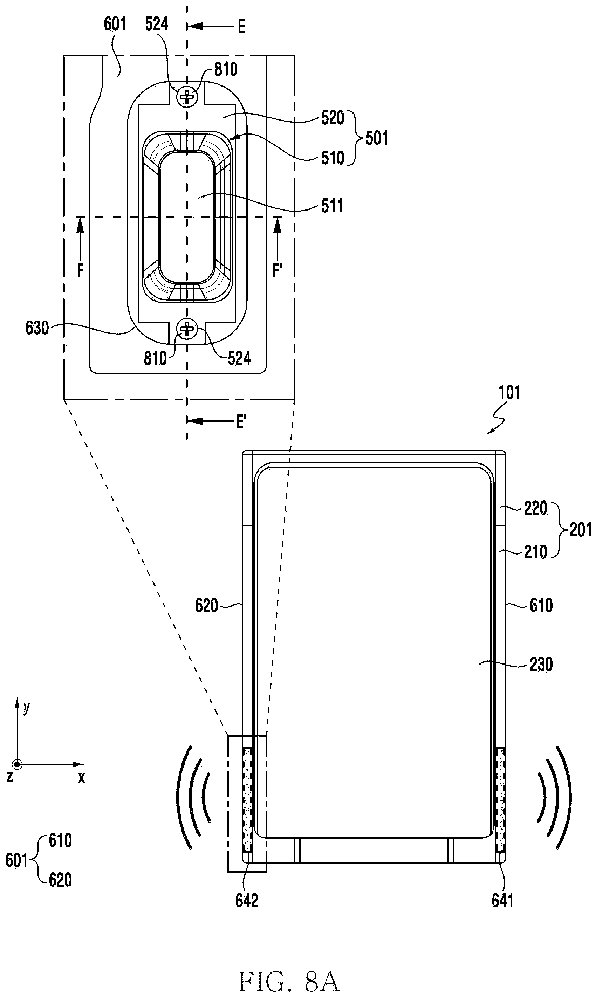

In the present example, itis described that an opening 630 and/or a recess 730 are formed on a side, e.g., the side 601 of FIG. 6, of the first housing part 210 and a guide member, e.g., a guide member 701 of FIG. 7B, to provide a space in which the speaker 510 is disposed, but it is not limited to the term. An opening, e.g., the opening 630 of FIG. 8A, and/or a recess, e.g., the recess 730 of FIG. 7B, may be a structure that forms a space for locating and/or providing a space in which to dispose the speaker 510. For example, the opening 630 and/or the recess 730 may be referred to as a term such as a through hole, an accommodating portion, a seating portion, or a recessed portion.

FIG. 5A illustrates an exemplary speaker module. FIG. 5B illustrates a diaphragm of an exemplary speaker module. FIG. 5C is a cross-sectional view of a diaphragm of FIG. 5B cut along C-C'.

Referring to FIG. 5A, a speaker module 501 includes a speaker 510 and an enclosure 520. Reference numeral 500a of FIG. 5A indicates the rear of the speaker module 501, and 500b of FIG. 5A indicates the front of the speaker module 501.

The speaker 510 includes a diaphragm 511. The diaphragm 511 is configured to radiate an audio signal by vibrating. The diaphragm 511 may for example comprise a polyetherimide "PEI" film, a poly ethylene naphthalate "PEN" film, a polyphenylene sulfide "PPS" film, a polyetheretherketone "PEEK" film, or a paper (cone paper)-based material, but is not limited thereto as long as it is a sufficiently elastic material.

The speaker module 501 includes the enclosure 520 surrounding at least a portion of the speaker 510. The enclosure 520 serves to protect components, e.g., the diaphragm 511, magnet 512, and voice coil 513 of FIG. 5C, included in the speaker 510, and may form a resonance space for the audio signal. The enclosure 520 includes a first part 521 and a second part 522. The first part 521 is a part of the enclosure 520 surrounding the magnet 512 and the voice coil 513. The first part 521 surrounds and supports a periphery of the diaphragm 511, and may also be referred to as a term such as a frame or a basket. The first part 521 may be configured to be coupled with the second part 522 or may be integrally configured with the second part 522. The second part 522 is a part of the enclosure 520 surrounding the resonance space for the audio signal radiated from the diaphragm 511. The second part 522 may form the resonance space on the opposite side to a direction 502 in which the audio signal is radiated from the diaphragm 511. In other words, the second part 522 may be formed to serve as a back chamber. Serving as a back chamber may be the main function of the second part 522.

The audio signal outputted from the speaker 510 is amplified at a resonance frequency, according to a volume of the resonance space. The audio signal generated by the vibration of the diaphragm 511 may be amplified by resonating in the resonance space. The resonance space may be referred to as a back chamber or back case formed on the opposite side to the direction 502 in which the audio signal is radiated from the diaphragm 511. For example, the enclosure 520 may form a sealed resonance space at the rear of the speaker 510, which is opposite to the direction 502.

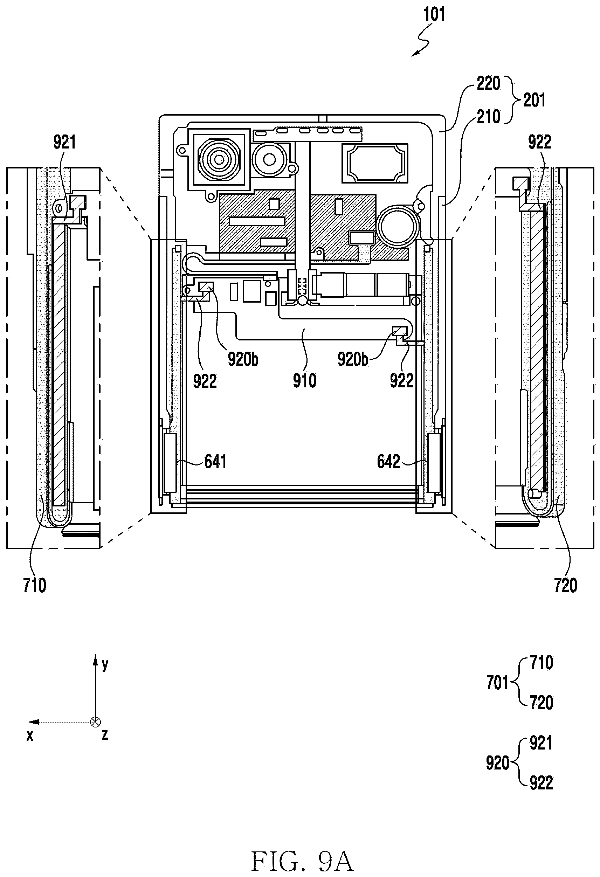

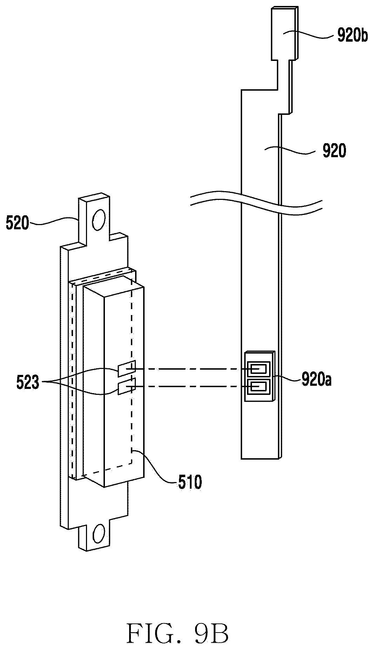

The enclosure 520 includes a contact pad 523 for electrical connection of the speaker 510. The contact pad 523 is electrically connected to the speaker 510. The contact pad 523 may be in contact with a flexible printed circuit board, e.g., a flexible printed circuit board 920 of FIG. 9A, for electrically connecting the printed circuit board 910 and the speaker 510. The flexible printed circuit board 920 may be extended from a printed circuit board, e.g., the printed circuit board 910 of FIG. 9A, to which a processor 120 is electrically connected, to thereby couple the processor to the contact pad 523. A signal for controlling the speaker 510 provided from the processor 120 may thus be transmitted through the printed circuit board 910, the flexible printed circuit board 920, and the contact pad 523. The contact pad 523 and a voice coil, e.g., the voice coil 513 of FIG. 5C, may be electrically connected through a lead wire (not illustrated). A structure of the flexible printed circuit board 920 will be described later with reference to FIGS. 9A and 9B.

The enclosure 520 is fastened in a first housing part, such as a first housing part 210 of FIG. 6, in a state of surrounding at least a portion of the speaker 510. The enclosure 520 includes a structure for being fastened to the first housing part 210. For example, the enclosure 520 includes a fixing hole 524. By a screw, e.g., a screw 810 of FIG. 8A, that passes through the fixing hole 524 and is inserted into the first housing part 210 and a guide member such as a guide member 701 of FIG. 7B, the enclosure 520 is fastened to the first housing part 210.

Referring to FIGS. 5B and 5C, the speaker 510 includes a magnet, e.g., the magnet 512 of FIG. 5C, and the voice coil, e.g., the voice coil 513 of FIG. 5C, for vibration of the diaphragm 511. The magnet 512 and the voice coil 513 are disposed below the diaphragm 511. The magnet 512 and the voice coil 513 cause the vibration of the diaphragm 511. The voice coil 513 is spaced apart from the magnet 512 and surrounded by the magnet 512. The magnet 512 is a permanent magnet. The speaker module 501 may include a yoke 514 for fastening the magnet 512. The yoke 514 may fasten the magnet and may collect force of a magnetic field generated by the magnet 512 to increase the output and/or efficiency of the speaker 510. The yoke 514 may surround at least a portion of the magnet 512. The yoke 514 may include a bottom plate yoke 514a or a top plate yoke 514b of the magnet 512.

Current that contains audio information may be provided from a processor, e.g., the processor 120 of FIG. 1, to the voice coil 513 through the printed circuit board 910, the flexible printed circuit board 920, and the contact pad 523. When the current flows through the voice coil 513, a magnetic field is formed in the voice coil 513. The voice coil 513 vibrates by action of pulling or repelling the magnetic field formed in the magnet 512 which is the permanent magnet and the magnetic field formed by the voice coil 513 from each other. The vibration of the voice coil 513 causes the vibration of the diaphragm 511, so that the audio signal is radiated.

The speaker module 501 described above may be disposed in the first housing part 210 and the guide member 701 of an electronic device, e.g., an electronic device 101 of FIG. 6. Hereinafter, a structure of the electronic device 101 including the speaker module 501 will be described .

FIG. 6 illustrates an exemplary electronic device.

Referring to FIG. 6, an exemplary electronic device 101 includes a housing 201 including a first housing part 210 and a second housing part 220.

The housing 201 may have a slidable structure or a rollable structure, with the second housing part 220 slidable or rollable with respect to the first housing part 210. The electronic device 101 is configurable in a slide-in state, e.g., a first state, in which the second housing part 220 is inserted into the first housing part 210; a slide-out state, e.g., a second state, in which the second housing part 220 is extracted from the first housing part 210; and a plurality of intermediate states between the first state and the second state. Components for the slidable structure may be substantially the same as the components described above.

The speaker 510 is configured to radiate an audio signal through a side 601 of the first housing part 210. The speaker 510 is at least partially disposed in the side 601 of the first housing part 210 to radiate the audio signal through the side 601 of the first housing part 210. The audio signal radiated from the speaker 510 may be radiated in a direction in which the side 601 faces. For example, the diaphragm 511 may be located to overlap an opening 630 formed in the side 601. As the diaphragm 511 is disposed to face the direction in which the side 601 faces, the audio signal radiated from the diaphragm 511 may be radiated in the direction. The opening 630 is a space in which at least a portion of the speaker 510 may be disposed, and may be omitted by partially removing the side 601 of the first housing part 210. The opening 630 may alternatively be provided by a recess such a recess in the first housing part 210, in terms of providing the space in which at least a portion of the speaker 510 is disposed.

For example, the side 601 includes a first periphery portion 601a and a second periphery portion 601b. The second periphery portion 601b is opposite the first periphery portion 601a. For example, the first periphery portion 601a may be an upper, e.g., +y direction, periphery. The second periphery portion 601b may be a lower, e.g., -y direction, periphery. The first periphery portion 601a may be in contact with the second housing part 220. For example, in the first state, the first periphery portion 601a may be in contact with the second housing part 220.

For example, the speaker 510 may be arranged closer to the second periphery portion 601b than to the first periphery portion 601a in the side 601. In case that the speaker 510 is close to the first periphery portion 601a, a space for various electronic components disposed on the upper portion of the housing 201 may be insufficient. For example, at least one key button 660 for receiving a user input for the electronic device 101 may be located at a point where a finger is naturally positioned when the user grips the housing 201. When the user grips the housing 201, the finger is naturally positioned on the upper portion of the housing 201, so the at least one key button 660 may be close to the first periphery portion 601a. In case that the speaker 510 disposed at least partially in the opening 630 formed in the side 601 close to the first periphery portion 601a, a constraint overlapping the position of the at least one key button 660 may occur. For example, in case that a conductive portion, e.g., an antenna radiator, for transmitting and/or receiving a wireless signal is formed at the upper periphery of the second housing part 220, a design constraint in which the speaker hole for the audio signal of the speaker 510 must avoid a non-conductive portion, e.g., a segment, for setting an electrical length of the conductive portion may be caused. In addition to the at least one key button 660, since various electronic components are disposed on the upper portion of the housing 201, for internal space for the various electronic components, the speaker 510 may be arranged closer to the second periphery portion 601b than the first periphery portion 601a.

The side 601 of the first housing part 210 may include a first side 610 and a second side 620. The first side 610 may be opposite to the second side 620. The first side 610 may be the side 601 of the first housing part 210 facing a +x direction. The second side 620 is the side 601 of the first housing part 210 facing a -x direction.

A speaker module 501 may be plural, in the sense that the term is used to apply to two or more speaker elements, components or modules that serve to produce an output sound from the electronic device. Such a plural speaker module may comprise two or more generally identical units, for example to enable a stereophonic sound output to be produced. The exemplary electronic device 101 includes a first speaker module 641 and a second speaker module 642. The first speaker module 641 is at least partially disposed in a first opening 631 formed in the first side 610. The second speaker module 642 is at least partially formed in a second opening 632 formed in the second side 620. The first speaker module 641 is opposite to the second speaker module 642. A first audio signal radiated from the first speaker module 641 is transmitted in the opposite direction to a second audio signal radiated from the second speaker module 642. For example, the first speaker module 641 and the second speaker module 642 may be used for stereophonic sound.

The exemplary electronic device 101 includes a grill 650 coupled to the outside of the opening 630. For example, the grill 650 may cover the speaker 510 by being coupled to the outside of the opening 630 formed on the side 601 of the first housing part 210. The grill 650 protects the speaker 510 by covering the speaker 510 exposed through the opening 630. The grill 650 prevents foreign bodies or foreign substances from entering the speaker 510. The grill 650 includes a plurality of through holes so that an audio signal radiated from the speaker 510 may be smoothly transmitted. For example, the grill 650 is a mesh grill including radiation holes. The grill 650 forms a portion of exterior design of the housing 201. The grill 650 includes a first grill 651 coupled to the outside of the first opening 631 and a second grill 652 coupled to the outside of the second opening 632.

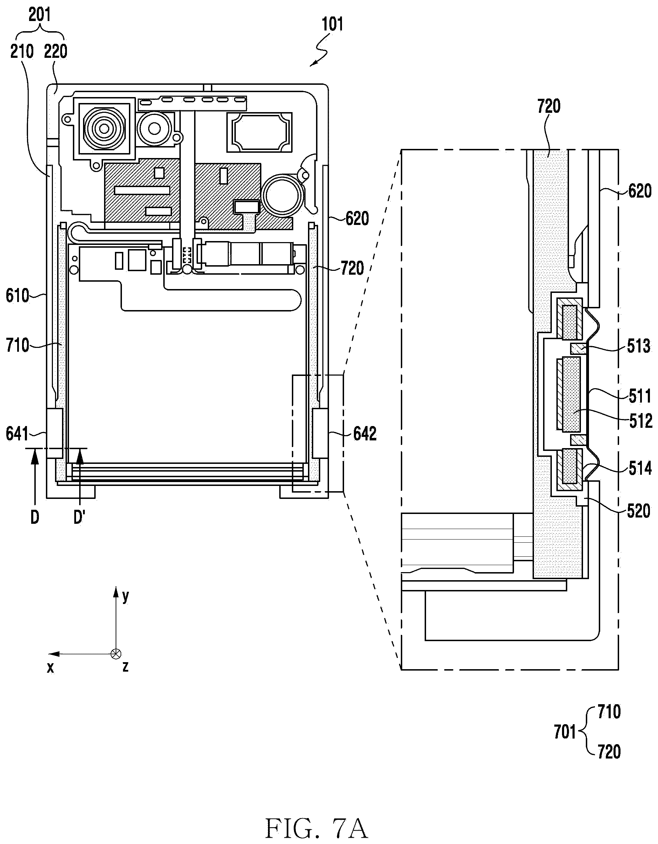

At least a portion of the speaker module 501 of FIG. 5A, including the speaker 510 is disposed in the opening 630 formed in the side 601 of the first housing part 210 and/or the recess, e.g., the recess 730 of FIG. 7B, formed in the guide member, e.g., the guide member 701 of FIG. 7A. For example, the speaker 510 is located to overlap the opening 630. Hereinafter, a structure of the guide member 701 is described.

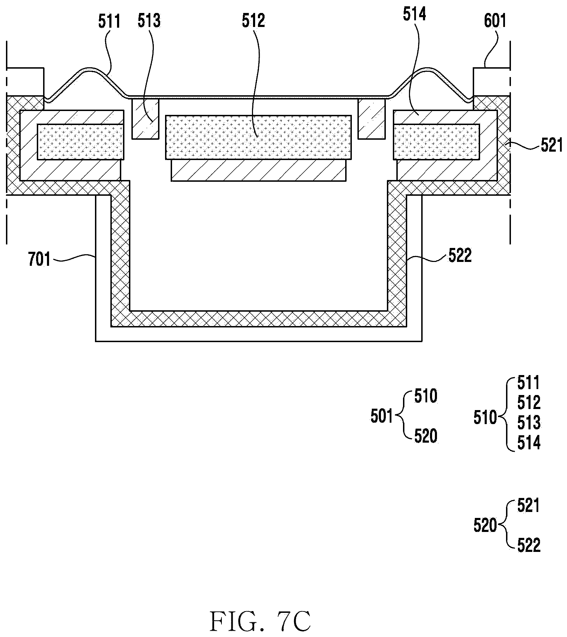

FIG. 7A illustrates the interior of the exemplary electronic device. FIG. 7B illustrates an exemplary guide member. FIG. 7C is a cross-sectional view of an electronic device of FIG. 7A cut along D-D'.

Referring to FIGS. 7A and 7B, the exemplary electronic device 101 includes a guide member 701. The guide member 701 slidably couples a second housing part 220 to a first housing part 210. For example, the guide member 701 may include a linear motion guide, "LM guide", that guides linear motion.

For example, the guide member 701 may include a first guide part, e.g., a first guide part 701a of FIG. 7B; and a second guide part, e.g., a second guide part 701b of FIG. 7B. The first guide part 701a may be coupled and fastened to the first housing part 210. The second guide part 701b may be coupled to the second housing part 220 and may be movably coupled to the first guide part 701a. For example, the second guide part 701b may be referred to as a carriage or a block. For example, the first guide part 701a may include a rail portion 741 to which the second guide part 701b is slidably coupled and a head portion 742 formed at the end of the rail portion 741 to limit movement of the second guide part 701b. The second guide part 701b may be slidable along the rail portion 741. The second guide part 701b is movably coupled in the rail portion 741. The rail portion 741 may include a ball bearing for natural movement of the second guide part 701b. One surface of the second guide part 701b may be movably coupled to the rail portion 741 of the first guide part 701a, and another surface of the second guide part 701b may be coupled to the second housing part 220. When the second guide part 701b moves in a first direction 261 along the rail portion 741, the second housing part 220 coupled to the second guide part 701b is moved in the first direction 261, so that the electronic device 101 may be changed to the second state. When the second guide part 701b moves in a second direction 262 opposite to the first direction 261 along the rail portion 741, the second housing part 220 coupled to the second guide part 701b is moved in the second direction 262, so that the electronic device 101 may be changed to the first state.

At least a portion of a speaker module, e.g., a speaker module 501 of FIG. 5A, including a speaker 510 may be disposed in a recess 730 formed in the first guide part 701a. The recess 730 may be formed in the head portion 742. Since the structure, e.g., the ball bearing, for the movement of the second guide part 701b is omitted in the head portion 742 and the head portion 742 has a structure that is functional simply by having a volume, the volume may be used as a resonance space. Since the second guide part 701b is not coupled to the head portion 742, unlike the rail portion 741, a thickness of the head portion 742 may be thicker than a thickness of the rail portion 741. The recess 730 is thus formed in the relatively thick head portion 742, and the speaker 510 and an enclosure 520 are disposed in the recess 730, so that a resonance space for an audio signal may be provided. The recess 730 may be replaced with an opening in terms of providing a space in which at least a portion of the speaker 510 and the enclosure 520 are disposed. A portion of the speaker module 501 may be disposed in an opening, e.g., an opening 630 of FIG. 8A, formed in the side 601 of the first housing part 210, and the remaining portion of the speaker module 501 may be disposed in the recess 730 formed in the guide part. The opening 630 and the recess 730 thus form a space in which the speaker module 501 is disposed.

The guide member 701 includes a first guide member 710 and a second guide member 720. The first guide member 710 and the second guide member 720 enable a movement of the second housing part 220 with respect to the first housing part 210, by being coupled to both sides of the first housing part 210 and the second housing part 220. For example, the first guide member 710 may be coupled to an inside of a first side 610 and the second housing part 220. The first guide member 710 guides movement of the second housing part 220 with respect to the first side 610. The second guide member 720 may be coupled to an inside of a second side 620 and the second housing part 220. The second guide member 720 guides movement of the second housing part 220 with respect to the second side 620. The first guide member 710 and the second guide member 720 movably couple the first housing part 210 and the second housing part 220, so that the second housing part 220 may be stably movable with respect to the first housing part 210. In example embodiments as shown, where the speaker 510 is provided as a first speaker module 641 and a second speaker module 642, at least a portion of the first speaker module 641 is disposed in a first recess 731 formed in the first guide member 710. At least a portion of the second speaker module 642 may be disposed in a second recess 732 formed in the second guide member 720.

Referring to FIG. 7C, the speaker module 501 may be disposed in the opening 630 formed in the side 601 of the first housing part 210 and the recess 730 formed in the guide member 701. For example, the speaker module 501 surrounded by the enclosure 520 may utilize a space present in the electronic device 101 due to a thickness of the guide member 701 as the resonance space. A second part 522 of the enclosure 520 surrounding the resonance space may encompass the resonance space by protruding in a thickness direction of the guide member 701.

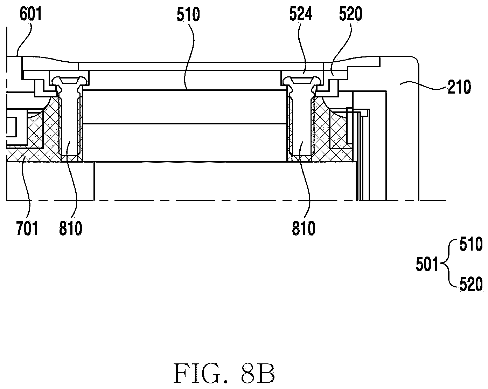

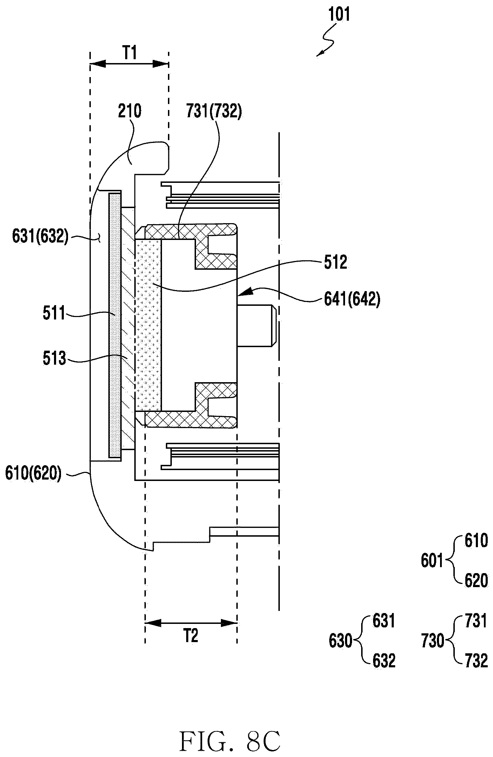

FIG. 8A illustrates the exemplary electronic device. FIG. 8B is a cross-sectional view of an electronic device of FIG. 8A cut along E-E'. FIG. 8C is a cross-sectional view of an electronic device of FIG. 8A cut along F-F'.

Referring to FIG. 8A, a speaker module 501 disposed on a side 601 of a first housing part 210 may partially overlap an opening 630 of the first housing part 210. For example, a diaphragm 511 may be located to overlap a first opening 631. The diaphragm 511 is disposed to face a direction in which the side 601 faces, so that an audio signal radiated from the diaphragm 511 may be radiated to the outside of the electronic device 101 through the opening 630 without a separate audio duct. Alternatively, in other embodiments the audio signal radiated from the diaphragm 511 may be radiated to the outside of the electronic device 101 through a relatively short, and/or straight audio duct, such as a duct extending directly from the diaphragm 511 to the opening 630. In other words, since an audio duct may be substantially omitted, the structure of the electronic device 101 may be simplified, and the loss or distortion of the audio signal as it passes through the audio duct may be avoided or reduced.

Referring to FIGS. 8A and 8B, the speaker 510 may be surrounded by the enclosure 520. The enclosure 520 may be coupled to the first housing part 210 using a screw 810, the screw 810 passing through a fixing hole 524, and being inserted into the first housing part 210 and a guide member 701. When the enclosure 520 is coupled to the first housing part 210, it may be disposed parallel to the side 601 so that the direction in which the diaphragm 511 faces and the direction in which the side 601 of the first housing part 210 faces are substantially the same. Since an audio signal generated by vibration of the diaphragm 511 is radiated in the direction in which the diaphragm 511 faces, it thus radiates to the outside of the electronic device 101 through the opening 630 formed in the side 601.

Referring to FIGS. 8A and 8C, the diaphragm 511 may overlap the opening 630. 'The reference to the diaphragm 511 overlapping the opening 630 may correspond to the diaphragm 511 being located in the opening 630. Both partial and complete overlap is contemplated. As described above, the opening 630 is a structure forming a space in which at least a portion of the speaker module 501 may be disposed, and may be replaceable with a functionally comparable structure in which the speaker module 501 is disposed. For example, the opening 630 may be replaced with a recess. As described above, since the diaphragm 511 is disposed to face the direction in which the side 601 of the first housing part 210 faces, the audio signal radiated from the diaphragm 511 radiates to the outside of the electronic device 101 through the opening 630 without a separate pipe structure. Since a direction in which the audio signal is radiated from the diaphragm 511 and a direction in which the audio signal is radiated to the outside of the electronic device 101 are the same, the audio signal may be transmitted without the separate pipe structure.

Referring to FIG. 8C, the diaphragm 511 and a voice coil 513 are located in the opening 630, and a magnet 512 and a resonance space are located in a recess 730. The diaphragm 511 that radiates the audio signal by vibration and the voice coil 513 that causes vibration may have a volume that may be accommodated in a thickness T1 of the side 601 of the first housing part 210. The diaphragm 511 and the voice coil 513 may be located in the opening 630 formed using the thickness T1 of the side 601. The magnet 512 providing a magnetic field for vibration and the resonance space for resonance of the audio signal may be located in the recess 730 formed using a thickness T2 of the guide member 701. Since the thickness T2 of the guide member 701 is thicker than the thickness T1 of the side 601, the magnet 512 and the resonance space may be accommodated in the thickness T2 of the guide member 701.

A first speaker module 641 may be disposed in the first opening 631 formed in a first side 610 and a first recess 731 formed in a first guide member 710. The diaphragm 511 of the first speaker module 641 may be located to overlap the first opening 631. The diaphragm 511 and the voice coil 513 of the first speaker module 641 may overlap the first opening 631 formed using a thickness of the first side 610, and the magnet 512 and the resonance space of the first speaker module 641 may overlap the first recess 731 formed using a thickness of the first guide member 710. A second speaker module 642 may be disposed in a second opening 632 formed in the second side 620 and a second recess 732 formed in a second guide member 720. The diaphragm 511 of the second speaker module 642 may be located to overlap the second opening 632. The diaphragm 511 and the voice coil 513 of the second speaker module 642 may overlap the second opening 632 formed using a thickness of the second side 620, and the magnet 512 and the resonance space of the second speaker module 642 may overlap the second recess 732 formed using a thickness of the second guide member 720.

Referring back to FIG. 8A, in case that the speaker 510 is configured to radiate the audio signal toward the position, e.g., the lower portion (e.g. -y direction) of the housing 201, where a second display area, e.g., a second display area 230b of FIG. 2C, of a flexible display 230 is inserted into or extracted from the first housing part 210, it may be difficult for the audio signal to be provided to the outside of the electronic device 101 by the flexible display 230. For example, since the second display area 230b is inserted into or extracted from the first housing part 210 near the lower portion of the housing 201, the lower portion of the housing 201 may be blocked by the second display area 230b. By reason of the location or disposition of the second display area 230b, it may be difficult to dispose the speaker 510 to radiate the audio signal toward the lower portion of the housing 201, that is, in the -y direction. In case that the speaker 510 is disposed at the upper portion, e.g. +y direction of the housing 201, space for a plurality of electronic components, e.g., a battery , a driving unit , or second image sensors located at the upper portion of the housing 201 may be insufficient. For example, in case that the speaker module 501 is disposed at the upper portion of the housing 201, a size of the battery 189 may need to be reduced.

As described above, the speaker module 501 is disposed in the side 601 of the first housing part 210 and the guide member 701, so that the audio signal radiated from the speaker 510 may not be blocked by the flexible display 230. The first speaker module 641 may radiate an audio signal in a direction, e.g., +x direction, in which the first side 610 faces, and the second speaker module 642 may radiate an audio signal in a direction, e.g., -x direction, in which the second side 620 faces. The first speaker module 641 is arranged to radiate a first audio signal in the direction in which the first side 610 faces. The second speaker module 642 is arranged to radiate a second audio signal in the direction in which the second side 620 faces. Since the first speaker module 641 and the second speaker module 642 radiate audio signals in different directions, the electronic device 101 may provide stereophonic sound using the symmetrical first speaker module 641 and the second speaker module 642. Since the direction in which the first audio signal is radiated and the direction in which the second audio signal is radiated does not face the position where the flexible display 230 is inserted into the first housing part 210 or extracted from the first housing part 210, the audio signal may be transmitted without interfering with the flexible display 230. Since the speaker module 501 is disposed at the lower portion of the housing 201, a space for disposing a plurality of electronic components disposed at the upper portion of the housing 201 need not be compromised.

FIG. 9A illustrates a rear of the exemplary electronic device 101. FIG. 9B illustrates a flexible printed circuit board and an enclosure.

Referring to FIG. 9A, the exemplary electronic device 101 includes a printed circuit board 910. The printed circuit board 910 provides an electrical connection between components of the electronic device 101. The printed circuit board 910 includes a plurality of conductive layers and a plurality of non-conductive layers alternately laminated with the plurality of conductive layers. For example, the printed circuit board 910 provides an electrical connection between the printed circuit board 910 and/or various electronic components disposed outside the printed circuit board 910, by using wiring and conductive vias formed in the conductive layer.

The exemplary electronic device 101 includes a processor, e.g., a processor 120 of FIG. 1,. The processor 120 is electrically connected to the printed circuit board 910. The processor 120 is configured to provide a signal for controlling a speaker 510. For example, the processor 120 may provide a signal for controlling the operation of the speaker 510 to the speaker 510. The speaker 510 may be configured to operate based on the signal provided from the processor 120.

In order for the processor 120 to control the operation of the speaker 510, an electrical connection between the processor 120 and the speaker 510 may be required. The electrical connection between the processor 120 and the speaker 510 may be made through the printed circuit board 910 and a flexible printed circuit board 920. The exemplary electronic device 101 may include the flexible printed circuit board 920. The flexible printed circuit board 920 may electrically connect the printed circuit board 910 and the speaker 510 electrically connected to the processor 120.

Referring to FIG. 9B, the flexible printed circuit board 920 is electrically connected to a contact pad 523 of an enclosure 520. The contact pad 523 is electrically connected to the speaker 510, surrounded by the enclosure 520. For example, the flexible printed circuit board 920 may include a contact portion 920a in contact with the contact pad 523. For example, the contact portion 920a may include a c-clip, a conductive pin, or a conductive pad, but is not limited thereto. When the contact portion 920a contacts the contact pad 523, wirings included in the contact portion 920a may be electrically connected to wirings included in the contact pad 523. By the electrical connection of the wirings, the flexible printed circuit board 920 may be electrically connected to the speaker 510. The flexible printed circuit board 920 may include a connector 920b connected to the printed circuit board 910 of FIG. 9A. The signal provided from the processor 120 electrically connected to the printed circuit board 910 may be transmitted to the flexible printed circuit board 920 through the connector 920b connected to the printed circuit board 910 and may be transmitted to the speaker 510 through the contact pad 523.

A portion of the flexible printed circuit board 920 may be deformable. The flexible printed circuit board 920 may be bent or twisted, and is deformable by including a substrate having flexibility. The flexible printed circuit board 920 may be bent or twisted in a narrow internal space of the electronic device 101 to electrically connect the processor 120 and the speaker 510.

Referring back to FIG. 9A, the flexible printed circuit board 920 may be extended from the printed circuit board 910 to an opening 630 along an inside facing a first housing part 210 of a guide member 701. The flexible printed circuit board 920 extended to the opening 630 may be electrically connected to a speaker module 501 disposed in the opening 630. As described above, an electrical connection between the flexible printed circuit board 920 and the speaker 510 may be made by electrical contact between a contact portion, e.g., the contact portion 920a of FIG. 9B and a contact pad, e.g., the contact pad 523 of FIG. 9B.

Referring to FIG. 9A, the guide member 701 may be disposed perpendicular to the printed circuit board 910. For example, the printed circuit board 910 may be disposed on the first housing part 210. The printed circuit board 910 disposed on the first housing part 210 may be disposed on the xy plane. The guide members 701 may be coupled to both sides of the first housing part 210 and both sides of the second housing part 220. The guide members 701 coupled to both sides of the first housing part 210 and both sides of the second housing part 220 may be disposed on the zx plane. The flexible printed circuit board 920 extending from the printed circuit board 910 to the speaker 510 may be partially bent.

For example, the connector 920b of the flexible printed circuit board 920 may be connected to the printed circuit board 910. The flexible printed circuit board 920 may be bent toward the inside of the guide member 701 facing the first housing part 210, so as to be extended along the inside of the guide member 701 after being extended from the connector 920b on the printed circuit board 910. For example, the flexible printed circuit board 920 may be electrically connected to the speaker 510, by bending to the zx plane in which the guide member 701 is disposed and being extended along the inside of the guide member 701, after being extended along the xy plane in which the printed circuit board 910 is disposed.

For example, the flexible printed circuit board 920 may include a first flexible printed circuit board 921 for an electrical connection between the processor 120 and a first speaker module 641 and a second flexible printed circuit board 922 for an electrical connection between the processor 120 and a second speaker module 642. The first flexible printed circuit board 921 may be extended from the printed circuit board 910 along the inside of the first guide member 710 and may be electrically connected to the first speaker module 641. The second flexible printed circuit board 922 may be extended from the printed circuit board 910 along the inside of the second guide member 720 and may be electrically connected to the second speaker module 642. A first signal for controlling the first speaker module 641 may be transmitted from the processor 120 to the first speaker module 641 through the printed circuit board 910 and the flexible printed circuit board 920. The first speaker module 641 may operate based on the first signal. A second signal for controlling the second speaker module 642 may be transmitted from the processor 120 to the second speaker module 642 through the printed circuit board 910 and the flexible printed circuit board 920. The second speaker module 642 may thus be operated based on the second signal.

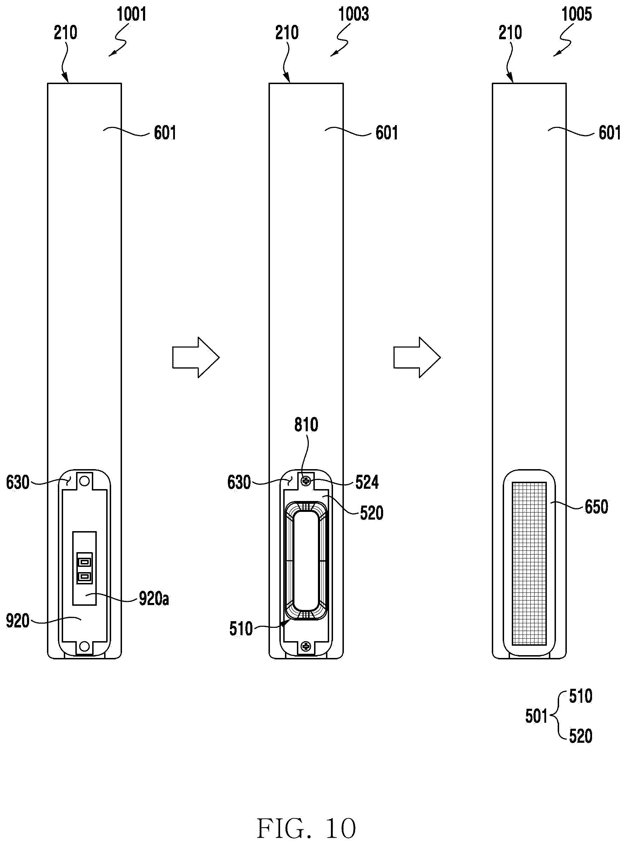

FIG. 10 illustrates an assembly process of a speaker.

Referring to FIG. 10, assembly of a speaker 510 may be performed by a method of inserting the speaker 510 from the outside of a first housing part 210 after assembly of the first housing part 210 and a second housing part, e.g., a second housing part 220 of FIG. 6.

The state 1001 of FIG. 10 illustrates a side 601 of the first housing part 210 before the speaker 510 is coupled. Referring to the state 1001 of FIG. 10, a portion of a flexible printed circuit board 920 is exposed through an opening 630. A portion of the flexible printed circuit board 920 exposed through the opening 630 includes a contact portion 920a. As the flexible printed circuit board 920 is extended along an inside of a guide member, e.g., a guide member 701 of FIG. 7B, to a recess, e.g., a recess 730 of FIG. 7b, a portion of the flexible printed circuit board 920 is exposed through the opening 630 and the recess 730.

The state 1003 of FIG. 10 illustrates the side 601 of the first housing part 210 to which the speaker 510 is coupled. Referring to the state 1003 of FIG. 10, the speaker 510 and an enclosure 520 are be inserted into the opening 630 and the recess 730 from the outside of the first housing part 210. A contact pad 523 is be aligned with the contact portion 920a so that a contact pad, e.g., the contact pad 523 of FIG. 9B, of the enclosure 520 contacts the contact portion 920a of the flexible printed circuit board 920. When the enclosure 520 is inserted into the opening 630 and the recess 730 in a state that the contact pad 523 is aligned with the contact portion 920a, the speaker 510 may be accommodated in the opening 630 and the recess 730. In a state in which the enclosure 520 is completely inserted, the enclosure 520 and the speaker 510 may be fastened to the first housing part 210 by coupling a screw 810 to the first housing part 210 and the guide member 701 through a fixing hole 524. A plurality of fixing holes 524 and screws 810 may be provided.

The state 1005 of FIG. 10 illustrates the side 601 of the first housing part 210 to which a grill 650 is coupled. Referring to the state 1005 of FIG. 10, the grill 650 may be coupled to the outside of the side 601. For example, the grill 650 may cover the outside of the opening 630 by being coupled to the opening 630 by an interference fit or a friction fit. As the grill 650 covers the outside of the opening 630, the speaker 510 is protected by being covered by the grill 650.

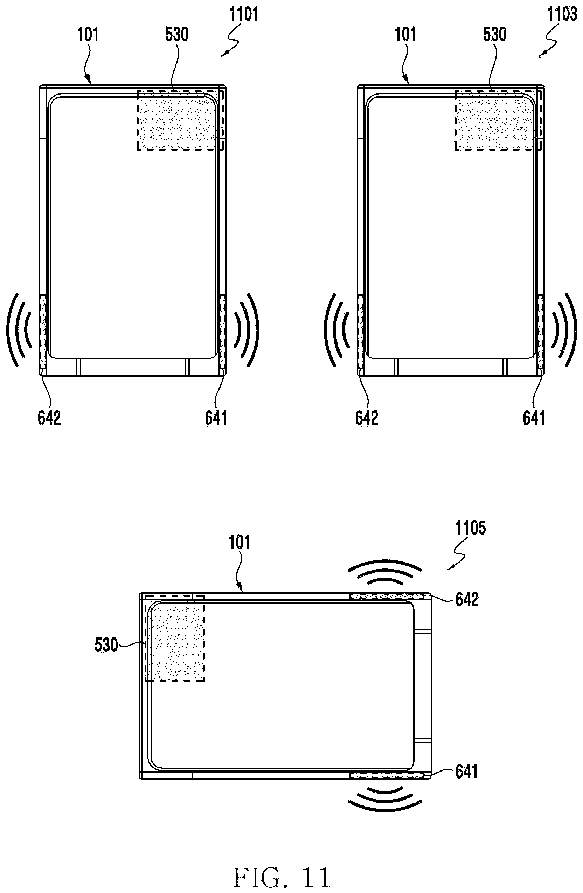

FIG. 11 schematically illustrates a state in which a speaker of an exemplary electronic device operates.

As described above, a speaker 510 may be provided as a first speaker module 641 and a second speaker module 642. Referring to FIG. 11, an exemplary electronic device 101 may further include a third speaker module 530. The third speaker module 530 may be disposed on the upper portion of the electronic device 101 by being disposed on a second housing part 220. For example, the third speaker module 530 may be used to provide an audio signal. The third speaker module 530 may be integrally formed with a receiver for a wireless call, but is not limited thereto. For example, the receiver may be included in the electronic device 101 as a separate component from the third speaker module 530.

The electronic device 101 may implement various sounds, by using the first speaker module 641, the second speaker module 642, and the third speaker module 530. For example, a processor such as the processor 120 of FIG. 1 may provide the various sounds to a user, by controlling the first speaker module 641, the second speaker module 642, and the third speaker module 530.

The image 1101 of FIG. 11 indicates the electronic device 101 providing 2.1 channel sound, by using the first speaker module 641, the second speaker module 642, and the third speaker module 530. The 2.1 channel sound may be implemented through two stereo speakers and one woofer speaker. Referring to image 1101 of FIG. 11, the first speaker module 641 and the second speaker module 642 may be the stereo speakers, and the third speaker module 530 may be the woofer speaker. For example, each of the first speaker module 641 and the second speaker module 642 may be configured to provide an audio signal of a left channel and an audio signal of a right channel, and the third speaker module 530 may be configured to provide an audio signal in a low-pitched range with a relatively low frequency. The electronic device 101 may provide a rich sound field effect by providing the 2.1 channel sound.

The image 1103 of FIG. 11 indicates the electronic device 101 using the first speaker module 641 for the audio signal in the low-pitched range and using the second speaker module 642 and the third speaker module 530 for an audio signal in a high-pitched range. Referring to the 1003 of FIG. 11, the first speaker module 641 may be a dynamic speaker for the audio signal in the low-pitched range, and the second speaker module 642 and the third speaker module 530 may be a tweeter speaker for the audio signal in the high-pitched range. Since the first speaker module 641 and the second speaker module 642 are at least partially disposed on the side 601 of the first housing part 210, in case that the side 601 is narrow, sizes of the first speaker module 641 and the second speaker module 642 may be small. As the first speaker module 641 and the second speaker module 642 having a relatively small size are implemented as the twitter speakers and the third speaker module 530 disposed on the upper portion is implemented as the dynamic speaker, it is possible to balance the audio signal in the low-pitched range and the audio signal in the high-pitched range.

The image 1105 of FIG. 11 may provide stereophonic sound, by using the first speaker module 641, the second speaker module 642, and the third speaker module 530. For example, the first speaker module 641, the second speaker module 642, and the third speaker module 530 may be the dynamic speakers. The first speaker module 641 may be configured to provide the audio signal of the left channel, and the second speaker module 642 and the third speaker module 530 may be configured to provide the audio signal of the right channel. The second speaker module 642 and the third speaker module 530 may operate like one speaker 510.

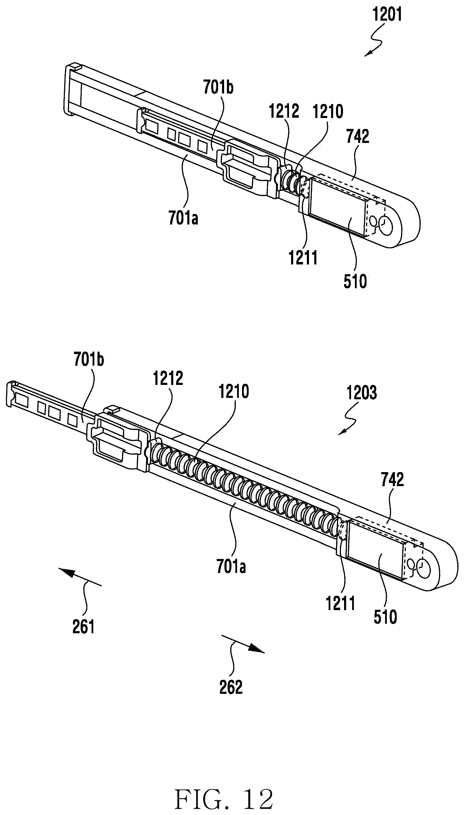

FIG. 12 illustrates a guide member including a structure for expanding a resonance space.

An audio signal may be amplified by resonating in the resonance space. A resonance frequency of the audio signal may be determined according to a volume of the resonance space. A resonance space of a certain volume may be required so that the speaker 510 has a resonance frequency in a designated frequency range. Since an audio signal in a low-pitched range have a lower frequency than an audio signal in a high-pitched range, so correspondingly has a relatively longer wavelength. For the quality of the audio signal in the low-pitched range, a resonance space of a certain volume or more may be required. As the resonance space increases, the quality of the audio signal in the low-pitched range may be improved.

Since an exemplary electronic device, e.g., an electronic device 101 of FIG. 6, includes a plurality of electronic components disposed inside a housing and components e.g., a driving unit for implementing a slide movement of the housing 201, an internal space of the electronic device 101 may be narrow. Since the internal space of the electronic device 101 is narrow, it may be difficult to secure the volume of the resonance space. In order to secure sufficient resonance space, the electronic device 101 may use an additional space formed by movement as a resonance space.

The state 1201 of FIG. 12 illustrates a guide member 701 in a first state in which a second housing part, e.g., a second housing part 220 of FIG. 6, is maximally inserted into a first housing part, e.g., a first housing part 210 of FIG. 6. The state 1203 of FIG. 12 illustrates the guide member 701 in a second state in which the second housing part 220 is maximally extracted to the outside of the first housing part 210.

For example, a second guide part 701b coupled to the second housing part 220 may be slidable with respect to a first guide part 701a. The second guide part 701b may slide along a rail portion 741. In case that the second guide part 701b moves to the maximum in a second direction 262 along the rail, the electronic device 101 may be in the first state. In case that the second guide part 701b moves to the maximum in a first direction 261 along the rail, the electronic device 101 may be in the second state.

Comparing the state 1201 and the state 1203, as the electronic device 101 changes from the first state to the second state, an empty space may be exposed between the first guide part 701a and the second guide part 701b. For example, referring to the state 1201, since the first guide part 701a and the second guide part 701b overlap to the maximum, a space formed between a head portion 742 of the first guide part 701a and the second guide part 701b may be relatively small. Referring to the state 1203, as the second guide part 701b moves from the first guide part 701a, the first guide part 701a and the second guide part 701b may overlap to the minimum. As the second guide part 701b moves away from the head portion 742, a space formed between the first guide part 701a and the second guide part 701b may become relatively large. According to an example embodiment, a resonance space for the audio signal may include the space formed between the first guide part 701a and the second guide part 701b. By the movement of the second guide part 701b, in case that an additional space formed between the first guide part 701a and the second guide part 701b is used as the resonance space, the resonance space may be expanded.

The exemplary electronic device 101 may include an elastic member 1210 disposed between the first guide part 701a and the second guide part 701b. The elastic member 1210 is flexibly so may be compressed or expanded by an external force. For example, the elastic member 1210 may have a structure similar to a bellows or a corrugated tube.

For example, the elastic member 1210 is arranged to seal a space between the first guide part 701a and the second guide part 701b formed according to the movement of the second guide part 701b. For example, a first end 1211 of the elastic member 1210 is connected to the resonance space. The first end 1211 is connected to a second part 522 of an enclosure 520 surrounding the resonance space, so as to be connected to the resonance space. A second end 1212 of the elastic member 1210 opposite to the first end 1211 is connected to the second guide part 701b. A portion between the first end 1211 and the second end 1212 may be compressed or expanded. An additional space between the first end 1211 and the second end 1212 may expand the resonance space, by being connected with the resonance space. For example, when the second guide part 701b is moved in the first direction 261 along the first guide part 701a, the first end 1211 is fastened, and the second end 1212 connected to the second guide part 701b may be moved along with the second guide part 701b. Since the first end 1211 is fastened and the second end 1212 is moved, a portion of the elastic member 1210 between the first end 1211 and the second end 1212 may be expanded. As the elastic member 1210 is expanded, between the first guide part 701a and the second guide part 701b, a space surrounded by the elastic member 1210 may be used as the resonance space. Since the above-described structure may utilize the space between the first guide part 701a and the second guide part 701b as the resonance space, the resonance space may be expanded. As the resonance space is expanded, the quality of the audio signal in the low-pitched range may be improved.

An electronic device 101 is provided. The electronic device 101 may comprise a housing 201 including a first housing part 210 and a second housing part 220. The electronic device 101 may comprise a guide member 701 including a first guide part 701a coupled to the first housing part 210, and a second guide part 701b coupled to the second housing part 220 and movably coupled to the first guide part 701a. The electronic device 101 may comprise a speaker module 501 including a speaker 510 including a diaphragm 511, and an enclosure 520 surrounding at least portion of the speaker 510. The speaker module 501 may be disposed at least partially in a recess 730 formed in the first guide part 701a and an opening 630 formed in a side 601 of the first housing part 210. At least a portion of the diaphragm 511 may be located to overlap the opening 630. According to the present disclosure, the electronic device 101 may be referred to as a rollable or slidable device. The speaker 510 may not require a pipe structure for an audio signal, by radiating the audio signal in the direction in which the side 601 of the first housing part 210 faces. Since the audio signal does not pass through the pipe structure, it is possible to reduce the quality deterioration of the audio signal caused by passing through the pipe structure. Since the audio signal may radiate the audio signal through the opening 630 formed in the side 601, it may be transmitted to a user without interfering with the rollable or slidable structure (e.g., a flexible display 230).

For example, the side 601 of the first housing part 210 may include a first periphery portion 601a in contact with the second housing part 220 and a second periphery portion 601b opposite to the first periphery portion 601b. The speaker module 501 may be closer to the second periphery portion 601b than to the first periphery portion 601a in the side 601. According to the present disclosure, since the speaker 510 is disposed at the bottom of the housing 201, a space for electronic components disposed at the top of the housing 201 may be secured. In case that a conductive portion and a non-conductive portion for forming an antenna radiator are located at the upper edge of the housing 201, the speaker 510 and a structure (e.g., speaker hole) for the speaker 510 may not interfere with the antenna radiator.

For example, the electronic device 101 may further comprise another speaker module 530 disposed in the second housing part 220. The speaker module 501 and the other speaker module 530 may be used to provide stereophonic sound. According to the present disclosure, the speaker 510 and the other speaker module 530 disposed in the second housing part 220 may implement the stereophonic sound by providing audio signals of left and right channels, respectively.

For example, the speaker 510 may include a magnet 512 and a voice coil 513 for vibration of the diaphragm 511. The enclosure 520 may include a first part 521 surrounding the magnet 512 and the voice coil 513, and a second part 522 surrounding a resonance space for the audio signal radiated from the diaphragm 511. According to the present disclosure, the speaker 510 may be surrounded by the enclosure 520. The enclosure 520 may protect the components of the speaker 510 and may form the resonance space for the audio signal.

For example, the diaphragm 511 and the voice coil 513 may be located in the opening 630. The magnet 512 and the resonance space may be located in the recess 730.

For example, a thickness of the guide member 701 may be thicker than a thickness of the side 601. According to the present disclosure, since the thickness of the guide member 701 is thicker than the thickness of the side 601, the magnet 512 and the resonance space occupying a relatively large volume may be located in the guide member 701. For example, the second part 522 of the enclosure 520 may be disposed within the recess 730 formed in the guide member 701.

For example, the side 601 may include a first side 610 and a second side 620 opposite the first side 610. The speaker module 501 may include a first speaker module 641 at least partially disposed in a first opening 631 formed in the first side 610, and radiating a first audio signal in a direction in which the first side 610 faces. The speaker module 501 may include a second speaker module 642 at least partially disposed in a second opening 632 formed in the second side 620, and radiating a second audio signal in a direction in which the second side 620 faces. According to the present disclosure, the first speaker module 641 and the second speaker module 642 may provide an audio signal through both sides 610 and 620 of the first housing part 210. The first speaker module 641 and the second speaker module 642 may provide the stereophonic sound.

For example, the guide member 701 may include a first guide member 710 coupled to an inside of the first side 610 and a second guide member 720 coupled to an inside of the second side 620. The first speaker module 641 may be disposed in the first opening 631 and a first recess 731 formed in the first guide member 710. The second speaker module 642 may be disposed in the second opening 632 and a second recess 731 formed in the second guide member 720. According to the present disclosure, the first guide member 710 and the second guide member 720 may guide the movement of the second housing part 220. The first guide member 710 and the second guide member 720 may provide a stable movement of the second housing part 220 by guiding the movement of the second housing part 220 with respect to the first housing part 210 on both sides of the second housing part 220.

For example, the electronic device 101 may further comprise a printed circuit board 910 disposed in the housing 201. The electronic device 101 may further comprise a flexible printed circuit board 920 electrically connecting the printed circuit board 910 and the speaker 510.

For example, the printed circuit board 910 may be disposed on the second housing part 220. The flexible printed circuit board 920 may be electrically connected to the speaker 510 by extending from the printed circuit board 910 along the inside towards the first housing part 210 of the guide member 701 to the opening 630. According to the present disclosure, the processor 120 for controlling the speaker 510 may be electrically connected to the printed circuit board 910. The flexible printed circuit board 920 having flexibility may transmit a control signal provided from the processor 120 to the speaker 510, by electrically connecting the printed circuit board 910 and the speaker 510.

For example, the speaker module 501 may include a first speaker module 641 and a second speaker module 642. The flexible printed circuit board 920 may include a first flexible printed circuit board 921 electrically connecting the printed circuit board 910 and the first speaker module 641. The flexible printed circuit board 920 may include a second flexible printed circuit board 922 electrically connecting the printed circuit board 910 and the second speaker module 642.

For example, the electronic device 101 may further comprise a grill 650 that covers the speaker 510 by being coupled to an outside of the opening 630 formed on the side 601 of the first housing part 210. The grill 650 may protect the speaker 510.

For example, a resonance space for the audio signal radiated from the diaphragm 511 may include an additional space formed between the first guide part 701a and the second guide part 701b by movement of the second guide part 701b.

For example, the electronic device 101 may further comprise an elastic member 1210 including a first end 1211 connected to the resonance space and a second end 1212 opposite to the one end and connected to the second guide part 701b, and that shrinks or expands by movement of the second guide part 701b. The additional space may be formed inside the elastic member 1210. According to the present disclosure, when the second guide part 701b is moved with respect to the first guide part 701a, a space may be formed between the first guide part 701a and the second guide part 701b. By expanding the resonance space into additional space, the resonance space may be expanded. Since the resonance space may be expanded, the quality of the low-pitched audio signal may be improved.

For example, the electronic device 101 may further comprise a flexible display 230 partially rolled into the first housing part 210 or pulled out from the inside of the first housing part 210 based on a movement of the second housing part 220.

An electronic device 101 is provided. The electronic device 101 may comprise a housing 201 including a first housing part 210 including a first side 610 and a second side 620 opposite to the first side 610, and a second housing part 220 movably coupled to the first side 610 and the second side 620. The electronic device 101 may comprise a first guide member 710 that guides a movement of the second housing part 220 with respect to the first side 610 and is coupled to the inside of the first side 610. The electronic device 101 may comprise a second guide member 720 that guides a movement of the second housing part 220 with respect to the second side 620 and is coupled to the inside of the second side 620. The electronic device 101 may comprise a first speaker module 641 disposed in a first opening 631 formed in the first side 610 and the first recess 731 formed in the first guide member 710. The electronic device 101 may comprise a second speaker module 642 disposed in a second opening 632 formed in the second side 620 and the second recess 732 formed in the second guide member 720. The first speaker module 641 may be arranged to face a direction in which the first side 610 faces. The second speaker module 642 may be arranged to face a direction in which the second side 620 faces.

For example, the first guide member 710 and the second guide member 720 may include a first guide part 701a coupled to the first housing part 210 and a second guide part 701b coupled to the second housing part 220 and movably coupled to the first guide part 701a.

For example, the first side 610 and the second side 620 may include a first periphery portion 601a in contact with the second housing part 220 and a second periphery portion 601b opposite to the first periphery portion 601b. The first speaker module 641 and the second speaker module 642 may be closer to the second periphery portion 601b than to the first periphery portion 601a in the side 601.

For example, the first speaker module 641 and the second speaker module 642 may be used to provide stereophonic sound.

For example, the electronic device 101 may further comprise a printed circuit board 910 disposed on the second housing part 220. The electronic device 101 may further comprise a first flexible printed circuit board 921 electrically connecting the printed circuit board 910 and the first speaker module 641. The electronic device 101 may further comprise a second flexible printed circuit board 922 electrically connecting the printed circuit board 910 and the second speaker module 642.

The electronic device according to various embodiments may be one of various types of electronic devices. The electronic devices may include, for example, a portable communication device such as a smartphone, a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly such as through a wired connection, wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit "ASIC".

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory "CD-ROM "), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (201) including a first housing part (210) and a second housing part (220);
a guide member (701) including:
a first guide part (701a) coupled to the first housing part (210), and
a second guide part (701b) coupled to the second housing part (220) and movably coupled to the first guide part (701a); and
a speaker module (501) including:
a speaker (510) including a diaphragm (511), and
an enclosure (520) surrounding at least portion of the speaker (510),
wherein the speaker module (501) is disposed at least partially in a recess (730) formed in the first guide part (701a) and an opening (630) formed in a side (601) of the first housing part (210), and
wherein at least a portion of the diaphragm (511) is located to overlap the opening (630).

2. The electronic device (101) of claim 1,
wherein the side (601) of the first housing part (210) includes a first periphery portion (601a) in contact with the second housing part (220) and a second periphery portion (601b) opposite to the first periphery portion (601b), and
wherein the speaker module (501) is closer, in the side (601) of the first housing part (210), to the second periphery portion (601b) than to the first periphery portion (601a).

3. The electronic device (101) of claim 2, further comprising another speaker module (530) disposed in the second housing part (220), and
wherein the speaker module (501) and another speaker module (530) are used to provide stereophonic sound.

4. The electronic device (101) of any one of claims 1 to 3,
wherein the speaker (510) includes a magnet (512) and a voice coil (513) for vibration of the diaphragm (511), and
wherein the enclosure (520) includes a first part (521) surrounding the magnet (512) and the voice coil (513), and a second part (522) surrounding a resonance space for the audio signal radiated from the diaphragm (511).

5. The electronic device (101) of claim 4,
wherein the diaphragm (511) and the voice coil (513) are located in the opening (630), and wherein the magnet (512) and the resonance space are located in the recess (730).

6. The electronic device (101) of claims 5,
wherein the guide member (701) is thicker than the side (601) of the first housing part (210).

7. The electronic device (101) of any one of claims 1 to 6,
wherein the side (601) of the first housing part (210) includes a first side (610) and a second side (620) opposite the first side (610), and
wherein the speaker module (501) includes:
a first speaker module (641) at least partially disposed in a first opening (631) formed in the first side (610), and radiating a first audio signal in a direction toward which the first side (610) faces, and
a second speaker module (642) at least partially disposed in a second opening (632) formed in the second side (620), and radiating a second audio signal in a direction toward which the second side (620) faces.

8. The electronic device (101) of claim 7,
wherein the guide member (701) includes a first guide member (710) coupled to an inside of the first side (610) and a second guide member (720) coupled to an inside of the second side (620),
wherein the first speaker module (641) is disposed in the first opening (631) and a first recess (731) formed in the first guide member (710), and
wherein the second speaker module (642) is disposed in the second opening (632) and a second recess (731) formed in the second guide member (720).

9. The electronic device (101) of any one of claims 1 to 8, further comprising:
a printed circuit board (910) disposed in the housing (201); and
a flexible printed circuit board (920) electrically connecting the printed circuit board (910) and the speaker (510).

10. The electronic device (101) of claim 9,
wherein printed circuit board (910) is disposed on the second housing part (220), and
wherein the flexible printed circuit board (920) is electrically connected to the speaker (510), extending from the printed circuit board (910) along the inside towards the first housing part (210) of the guide member (701) to the opening (630).

11. The electronic device (101) of claim 9 or 10,
wherein the speaker module (501) includes a first speaker module (641) and a second speaker module (642), and
wherein the flexible printed circuit board (920) includes:
a first flexible printed circuit board (921) electrically connecting the printed circuit board (910) and the first speaker module (641), and
a second flexible printed circuit board (922) electrically connecting the printed circuit board (910) and the second speaker module (642).

12. The electronic device (101) of any one of claims 1 to 11, further comprising a grill (650) that covers the speaker (510) by being coupled to an outside of the opening (630) formed on the side (601) of the first housing part (210).

13. The electronic device (101) of any one of claims 1 to 12,
comprising a resonance space for the audio signal radiated from the diaphragm (511), the resonance space comprising an additional space formed between the first guide part (701a) and the second guide part (701b) by movement of the second guide part (701b).

14. The electronic device (101) of claim 13, further comprising an elastic member (1210) including a first end (1211) connected to the resonance space and a second end (1212) opposite to the one end and connected to the second guide part (701b), and that shrinks or expands by movement of the second guide part (701b), and
wherein the additional space is formed inside the elastic member (1210).

15. The electronic device (101) of any one of claims 1 to 14, further comprising a flexible display (230) arrangeable to be partially rolled into the first housing part (210) or pulled out from the inside of the first housing part (210) by movement of the second housing part (220) relative to the first housing part (210).
